# EUROPEAN PATENT APPLICATION

(11) **EP 1 515 328 A2**
(43) Date of publication of application: **16.03.2005**
(21) Application number: 04020865.4
(22) Date of filing: 02.09.2004
(51) Int. Cl.: G11B 19/02

(54) **Output control apparatus, output control method, and computer program**

(30) Priority: 03.09.2003 JP 2003310971
(71) Applicant: SONY CORPORATION, Tokyo (JP)
(72) Inventor: Nakano, Hiroaki, Shinagawa-ku Tokyo (JP)
(74) Representative: Melzer, Wolfgang, Dipl.-Ing.

(57) **Abstract**

An audio player is composed of a base unit available as a body unit and a plurality of blocks adapted to storage of information relating to music data to be reproduced, and is to reproduce the music data stored in a hard disk incorporated in the base unit and to output the reproduced music data through a speaker. The blocks have respectively storage units, and contain information relating to the music data specified as contents data stored in the hard disk, in which case, installation of the blocks on the base unit allows the base unit to read out the stored information, and the music data corresponding to the read-out information is reproduced depending on a position of the block.

## Description

### CROSS REFERENCE TO RELATED APPLICATION

This application claims priority from Japanese Priority Document No. 2003-310971, filed on Sep. 3, 2003 with the Japanese Patent Office, which document is hereby incorporated by reference.

### BACKGROUND OF THE INVENTION

### 1. Field of the Invention

The present invention relates to an output control apparatus, an output control method and a program, and more particularly, to an output control apparatus, an output control method and a program, which are able to manage and output a large amount of stored contents data.

### 2. Description of the Related Art

Heretofore, contents data such as music data, for instance, is managed in units of recording media (media units) such as a cassette tape available as a cassette tape device and a record disc. For such music data, for instance, these recording media (media) are usually capable of recording music as many as several to several ten pieces of music. Normally, a user selects a medium containing user's desired music (music data) among a plurality of media and then installs the selected medium in a reproducing apparatus for reproduction of music data. Thus, the user usually records a plurality of music data stored in the media in a mass, and keeps the media containing a large number of music data, but the user does not specify these music data one by one for the reproduction, and may achieve the reproduction by specifying the music data in media units.

An audio player available as the reproducing apparatus for reproducing the music data stored in the above media has buttons respectively dedicated to various operations such as playback, stop, fast-forward and fast-rewind of the music (the music data), and allows the user to control the reproduction of the music data by operating these buttons. In the above media, there is a limit on the number of music data stored in the media, so that the user is allowed to control the reproduction of the music data sufficiently only through the operation of the above buttons. Thus, the above audio player simply needs a display of a small size enough to be able to display a title of music being in the process of reproduction.

However, the media such as the record disc and a CD-ROM (Compact Disc-Read Only Memory) are applied only to the reproduction, and permit no writing, resulting in no editing of the recording contents in the above media even if unnecessary data unsuited to a user's preference is contained. On the contrary, data write-enable media such as the cassette tape and a CD-R (Compact Disc-Recordable) are capable of recording only selected music data suited to the user's preference. However, in this case, there is also a limit on a volume of data capable of being stored in one medium, so that the number of media required increases in proportion to the number of music data to be reproduced.

Then, in recent years, a method of recording the music data in a hard disk available as a magnetic recording medium having a large capacity as compared with the above media has come into use. In the hard disk, a capacity as large as several ten to several hundred gigabytes is realizable at low cost, leading to an attainment of recording of the music (the music data) as many as several thousand pieces of music. For instance, an audio player, etc. is available, in which the hard disk is incorporated in the audio player as the reproducing apparatus applied to the reproduction in the media such as the CD-ROM, records a massive amount of music data, and reproduces the music data.

Like the above audio player for reproducing the music data stored in the media such as the CD-ROM, the audio player for reproducing the music data stored in the above hard disk also has buttons respectively dedicated to various operations such as playback, stop, fast-forward and fast-rewind of the music (the music data), and allows the user to control the reproduction of the music data by operating these buttons.

By the way, the hard disk is normally available as a storage medium of a personal computer. However, in recent years, the personal computer has come into use, with a wide spread thereof, for various purposes such as for a processing in cooperation with other apparatuses through a network such as LAN and Internet, for instance, (See Patent Documents 1 and 2, for instance), in addition to original uses as an apparatus for development. Accordingly, the personal computer, for instance, stores the massive amount of music data by copying, through an execution, etc., of a prescribed application, the music data from the above media into the incorporated hard disk (or recording the music data in the hard disk after a processing such as a compression of the music data read out from the CD-ROM and a conversion of the music data into data having a copyright function) or by downloading the music data from a server through the network and recording the music data in the incorporated hard disk, and is operated as the above audio player by reproducing the stored music data.

The above personal computer, although normally having a large display as compared with that of the audio player, allows the user to control the reproduction, like the case of the audio player in principle, by displaying, on the display, a GUI (Graphical User Interface) including various software buttons indicating the processing such as playback, stop, fast-forward and fast-rewind of the music (the music data), like the case of the audio player. In the above personal computer, some personal computers suggest managing the music data hierarchically by grouping the music data by album title or artist name, thereby allowing the user to select the music with the GUI more easily.
Patent Document 1: Japanese Laid-Open Patent No. 2001-136504
Patent Document 2: Japanese Laid-open Patent No. 2001-175374

However, when the music data to be reproduced is stored in the hard disk as described the above, an increase in number of the music data to several thousands is often caused, because of the large capacity of the hard disk. Thus, the audio player, when being equipped with only a simple display like the audio player having the above hard disk, might have a problem that a complicated work is required in some cases, since the user must retrieve user' s desired music out of the massive amount of music data for the reproduction with only the operation of the buttons for playback, stop, fast-forward and fast-rewind, etc.

With the use of the display as large as that of the above personal computer for the audio player having only a music data reproduction function, a method of allowing the user to carry out complicated operations such as a hierarchical retrieval of the music data by displaying the GUI using the large display is also supposed to be available, but, in this case, it has problems that not only an increase in manufacture cost is caused, but also a size of the audio player is increased unnecessarily.

In this case, the use of a user interface such as a mouse, for instance, is indispensable to manage the music data and thus requires a complicated operation, resulting in problems that the user fails to understand the complicated operation by intuition, leading to no attainment of the easy management of the music data for the reproduction, unlike the audio player for reproducing the music data stored in the media such as the CD-ROM.

### SUMMARY OF THE INVENTION

The present invention is undertaken in view of the above circumstances, and is intended to enable easier management and output of massively stored contents data to be attained.

An output control apparatus according to the present invention comprises recording means of storing contents data, communication means of performing communication with each block unit disposed on an area, acquisition means of acquiring information relating to the contents data from the block unit using the communication performed by the communication means, block management means of performing, using the communication performed by the communication means, management of an arrangement condition of the block units in a plurality of areas provided on a body unit, and output control means of determining an output order of the contents data stored by the recording means in correspondence with the contents data-related information acquired by the acquisition means based on the management performed by the block management means, and reproducing and outputting the contents data based on the output order, whereby the contents data corresponding to the block units is reproduced and outputted in an order made to correspond to a relation in arrangement position of the block units disposed on the areas.

The communication means may be configured to perform infrared communication with each block unit disposed on the area.

The output control apparatus according to the present invention further comprises detection signal output means of outputting, using the communication performed by the communication means, a detection signal to each block unit disposed on the area, and response signal acquisition means of acquiring a response signal corresponding to the detection signal, the response signal being outputted from the block unit having acquired the detection signal, wherein the block management means is capable of managing the arrangement condition of the block units based on the response signal acquired by the response signal acquisition means.

The output control means is capable of reproducing and outputting a plurality of contents data corresponding to each block unit in the same order as the order which is obtained with the management performed by the block management means and a plurality of blocks are arranged in this order.

The block management means further manages a direction of each block unit disposed on the area to the body unit, wherein the output control means is capable of determining the contents data to be outputted based on the information relating to the block direction managed by the block management means.

Further, measurement means of taking measurement on a quantity of light around the body unit is included, wherein the output control means is capable of selecting and outputting the contents data to be outputted based on a result of the measurement performed by the measurement means among the plurality of contents data corresponding to each block unit disposed on the area.

An output control method according to the present invention comprises a recording control step of controlling storing of contents data, a communication control step of controlling communication with each block unit disposed on an area, an acquisition step of acquiring information relating to the contents data from the block unit using the communication performed by a processing of the communication control step, a block management step of performing, using the communication performed by the processing of the communication control step, management of an arrangement condition of the block units in a plurality of areas provided on a body unit, and an output control step of determining an output order of the contents data stored by a processing of the recording control step in correspondence with the contents data related-information acquired by a processing of the acquisition step based on the management performed by a processing of the block management step, and reproducing and outputting the contents data based on the output order, whereby the contents data corresponding to the block units is reproduced and outputted in an order made to correspond to a relation in arrangement position of the block units disposed on the areas.

The communication control step is capable of performing infrared communication with each block unit disposed on the area.

The output control method further includes a detection signal output control step of controlling, using the communication performed by the processing of the communication control step, output of a detection signal to each block unit disposed on the area, and a response signal acquisition step of acquiring a response signal corresponding to the detection signal, the response signal being outputted from the block unit which acquires the detection signal, wherein the processing of the block management step is capable of managing the condition of arrangement of the block units based on the response signal acquired by a processing of the response signal acquisition step.

A processing of the output control step is capable of reproducing and outputting a plurality of contents data corresponding to each block unit in the same order as an order in which a plurality of blocks are arranged and which is obtained by the management performed by the processing of the block management step.

The processing of the block management step is further managing a direction of each block unit disposed on the area to the body unit, wherein the processing of the output control step is capable of determining the contents data to be outputted based on information relating to the block direction managed by the processing of the block management step.

The output control method further includes a measurement step of taking measurement on a quantity of light around the body unit, wherein the processing of the output control step is capable of selecting and outputting the contents data to be outputted based on a result of the measurement performed by a processing of the measurement step among a plurality of contents data corresponding to each block unit disposed on the area.

A program according to the present invention comprises a recording control step of controlling storing of contents data, a communication control step of controlling communication with each block unit disposed on an area, an acquisition step of acquiring information relating to the contents data from the block unit using the communication performed by a processing of the communication control step, a block management step of performing, using the communication performed by the processing of the communication control step, management of a condition of arrangement of the block units in a plurality of areas provided on a body unit, and an output control step of determining, based on the management performed by a processing of the block management step, an output order of the contents data corresponding to the contents data-related information acquired by a processing of the acquisition step and being stored by a processing of the recording control step, and reproducing and outputting the contents data based on the output order, whereby the contents data corresponding to the block units is reproduced and outputted in an order made to correspond to a relation in arrangement position of the block units disposed on the areas.

In the output control apparatus, the output control method and the program according to the present invention, the contents data is stored, the communication with each block unit disposed on the area is performed, the information relating to the contents data is acquired from the block unit using the communication, the condition of arrangement of the block units in the plurality of areas provided on the body unit is managed using the communication, the output order of the stored contents data corresponding to the acquired contents data-related information is determined based on the management, and the contents data is reproduced and outputted based on the output order, whereby the contents data corresponding to the block units is reproduced and outputted in the order made to correspond to the relation in arrangement position of the block units disposed on the areas, for instance.

According to the present invention, it is able to control the information. In particular, it is able to easily manage and output the massively stored contents data.

Embodiments of the present invention are hereinafter described, and it is understood that a correspondence between components set forth in claims and specific instances in the embodiments of the invention is illustrative as follows. This description is to confirm that the specific instances given to support the invention set forth in the claims are contained in a description of the embodiments of the invention. Thus, it is understood that the presence of any specific instance not set forth herein as that corresponding to the components, although being contained in the description of the embodiments of the invention, be not restrictive to that the above specific instance is not that corresponding to the components. On the contrary, it is understood that the presence of any specific instance set forth herein as that corresponding to the components be not restrictive to that the above specific instance is not that corresponding to any component other than the above components.

Further, it is understood that this description be not restrictive to that the inventions corresponding to the specific instances contained in the description of the embodiments of the invention are all set forth in the claims. In other words, this description is that relating to the invention corresponding to the specific instance contained in the description of the embodiments of the invention, and is made without denying the presence of any invention not set forth in the claims of this application, that is, the presence of any invention that would be applied in division or added by amendment in the future.

### BRIEF DESCRIPTION OF THE DRAWINGS

FIG. 1 is a perspective view showing an embodiment of an external appearance of an audio player to which the present invention is applied;
FIG. 2 is a perspective view showing an embodiment of an external appearance of a base unit in FIG. 1;
FIG. 3 is a view showing a configuration of a registration slot in FIG. 2;
FIG. 4 is a perspective view showing an embodiment of an external appearance of a block in FIG. 1;
FIG. 5 is a perspective view of an embodiment of the external appearance of the block in FIG. 1, as viewed from an angle different from that in FIG. 4;
FIGS. 6A to 6D are views for illustrating an embodiment of installation of the block;
FIG. 7 is a block diagram showing an internal configuration of the base unit in FIG. 2;
FIG. 8 is a block diagram showing a detailed configuration of an infrared communication unit 76 in FIG. 7;
FIG. 9 is a block diagram showing an internal configuration of the block in FIG. 4;
FIG. 10 is a function block diagram for illustrating a base unit function relating to storage of music data;
FIG. 11 is a function block diagram for illustrating a base unit function relating to a processing to register information relating to the music data into the block;
FIG. 12 is a flowchart for illustrating an album title registration processing;
FIG. 13 is a schematic view showing an embodiment of a manner of registration of an album title;
FIG. 14 is a function block diagram for illustrating a base unit function relating to a processing to reproduce the music data;
FIG. 15 is a flowchart for illustrating a block management processing;
FIG. 16 is a flowchart following that of FIG. 15 and illustrating the block management processing;
FIG. 17 is a schematic view for illustrating an embodiment of a manner of management of the block;
FIG. 18 is a flowchart for illustrating a music selection list management processing;
FIG. 19 is a schematic view for illustrating an embodiment of a manner of management of a music selection list;
FIG. 20 is a flowchart for illustrating a reproduction control processing;
FIGS. 21A and 21B are flowcharts for illustrating an embodiment of a manner of control of reproduction;
FIGS. 22A and 22B are flowcharts for illustrating a different embodiment of the manner of control of the reproduction;
FIGS. 23A and 23B are flowcharts for illustrating a further different embodiment of the manner of control of the reproduction;
FIGS. 24A to 24D are flowcharts for illustrating a further different embodiment of the manner of control of the reproduction;
FIG. 25 is a function block diagram for illustrating a block function relating to a processing performed for the processing of the base unit;
FIG. 26 is a flowchart for illustrating a block operation control processing;
FIG. 27 is a flowchart following that of FIG. 26 and illustrating the block operation control processing;
FIG. 28 is a flowchart for illustrating a different embodiment of the music selection list management processing;
FIG. 29 is a block diagram showing a different internal configuration of the base unit in FIG. 2;
FIG. 30 is a function block diagram showing a base unit function relating to a processing to register information relating to music data into the block;
FIG. 31 is a flowchart for illustrating a different embodiment of the album registration processing;
FIG. 32 is a schematic view showing a different embodiment of the manner of registration of the album title;
FIG. 33 is a function block diagram for illustrating a different embodiment of the base unit function relating to the music data reproduction processing;
FIG. 34 is a flowchart for illustrating a different embodiment of the block management processing;
FIG. 35 is a flowchart following that of FIG. 24 and illustrating the different embodiment of the block management processing; and
FIG. 36 is a flowchart for illustrating a different embodiment of the reproduction control processing.

### DETAILED DESCRIPTION OF THE PREFERRED EMBODIMENTS

Embodiments of the present invention are described hereinafter with reference to the drawings.

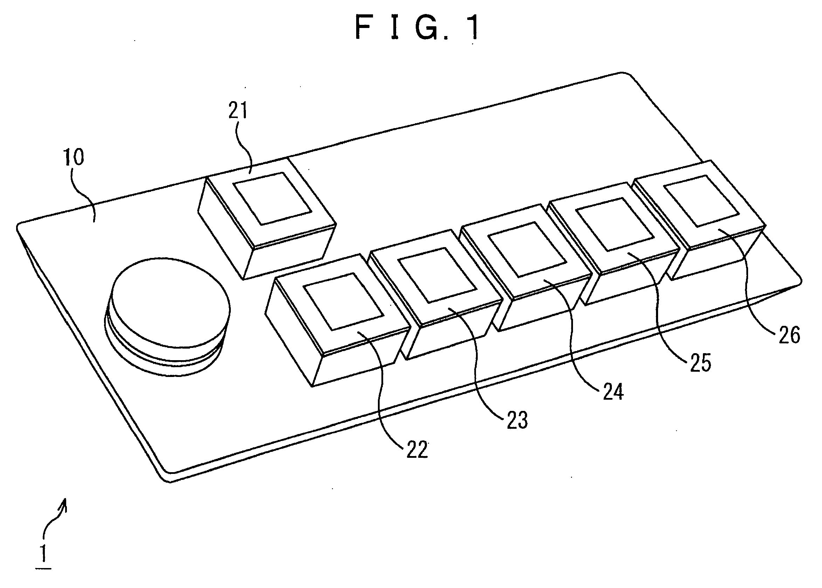

FIG. 1 is a perspective view showing an external appearance of an audio player to which the present invention is applied.

In FIG. 1, an audio player 1 is an audio player, which is composed of a base unit 10 available as a body unit and a plurality of blocks 21 to 26 adapted to storage of information relating to music data to be reproduced, and is to reproduce the music data stored in a hard disk incorporated in the base unit 10 and to output the reproduced music data through a non-illustrated speaker, as described later.

As described later, the blocks 21 to 26 have respectively storage units, and contain information relating to the music data specified as contents data stored in the hard disk, in which case, installation of the blocks on the base unit 10 allows the base unit 10 to read out the stored information, and the music data corresponding to the read-out information is reproduced depending on a position of the block.

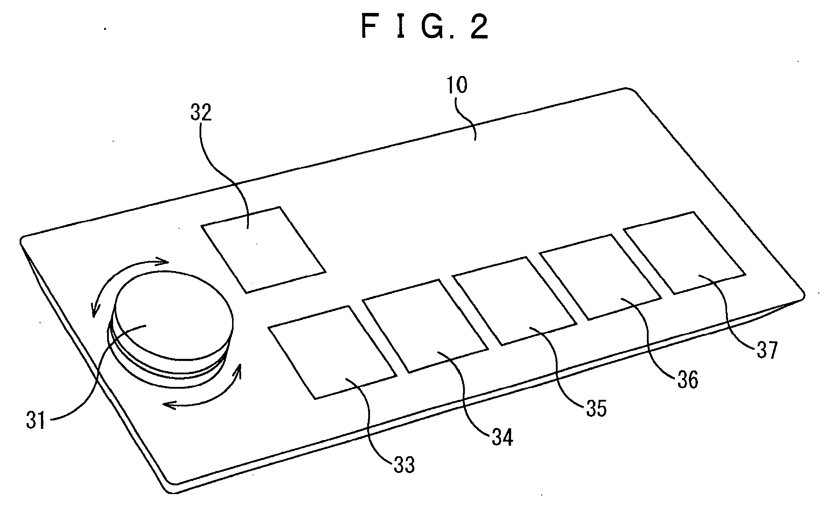

The external appearance of the base unit 10 is shown in FIG. 2. In FIG. 2, the base unit 10 has, on an upper surface, for instance, a dial switch 31 that functions as a volume for adjusting an output level of music (the music data) through an operation by the user in the process of reproduction of the music and as a selector for selecting information relating to the music data through the operation by the user when storing the information relating to the music data in the block, a registration slot 32 specified as a place allowed for the installation of the block when storing the information relating to the music data in the block, and reproduction slots 33 to 37 specified as places allowed for the installation of the blocks by the user when reproducing the music data corresponding to the information stored in the block.

The dial switch 31 is formed to enable turning in both directions indicated by arrows in FIG. 2, in other words, in a direction horizontal to the upper surface of the base unit 10 about a center point of the upper surface of the dial switch 31, and outputs, in a circuit at an inside of the base unit 10, a control signal responding to a position or a rotation amount of the dial switch to select information to be registered into the block or to control a reproducing volume.

The registration slot 32 is in the form of a square area provided on the upper surface of the base unit 10, specifically, an area allowed, by the user, for the installation of the block adapted to the storage of the information relating to the music data (specifically, an arrangement on the registration slot 32). As described later, the registration slot 32 has an infrared emission unit and an infrared detection unit, in which case, the base unit 10 performs infrared communication with the block for transmission and reception of the information using these units.

The reproduction slots 33 to 37 basically have the same configuration as the registration slot 32, in other words, each of the reproduction slots is in the form of a square area provided on the upper surface of the base unit 10, and has an infrared emission unit and an infrared detection unit that are used for the infrared communication of the base unit 10 with the blocks for the transmission and the reception of the information. For the reproduction slots 33 to 37, the blocks adapted to the reproduction of the music data are installed by the user (specifically, arranged on the reproduction slots 33 to 37). Incidentally, as described later, depending on that the block is installed on which of the reproduction slots 33 to 37, a reproduction order of the music data corresponding to the information contained in the installed block is determined.

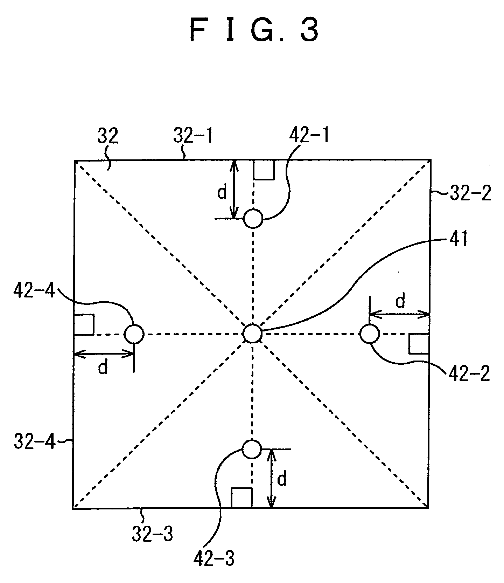

FIG. 3 shows an embodiment of a configuration of the registration slot 32. In FIG. 3, the registration slot 32 has an infrared emission unit 41 in the center (at a position where diagonal lines of a square defining the registration slot 32 intersect) as described above. Also, infrared detection units 42-1 to 42-4 are provided at positions on lines that bisect four sides 32-1 to 32-4 of the registration slot 32 respectively at right angles through the center of the registration slot 32, specifically, at positions inner (closer to the center of the registration slot 32) than the sides by a prescribed distance d.

The reproduction slots 33 to 37 shown in FIG. 2 have the same configuration as the registration slot 32 shown in FIG. 3, and allow the configuration shown in FIG. 3 to be applied, so that a description on these reproduction slots is omitted.

The blocks are now described. The blocks 21 to 26 shown in FIG. 1 are the same in configuration, so that a description of only the block 21 is given in the following.

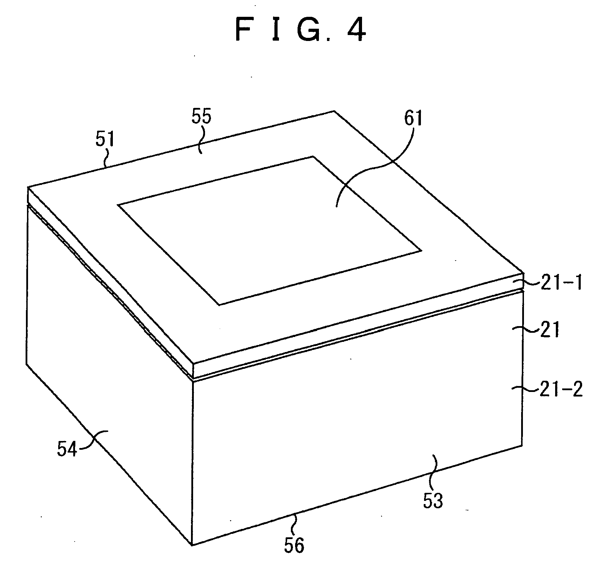

As shown in FIG. 4, the block 21 is in the form of a rectangular parallelepiped surrounded by four rectangular side surfaces 51 to 54, a square upper surface 55 and a square bottom surface 56. The bottom surface 56 takes shape of a square of the same size as each slot (the registration slot 32 and the reproduction slots 33 to 37) of the base unit 10, and is formed so as to allow the block 21 to be installed on each slot.

The block 21 contains a switch as described later, and has a movable unit 21-1 of the switch on the side of the upper surface 55. Specifically, the block 21 is composed of the movable unit 21-1 and a body unit 21-2, and the upper surface 55 of the block 21 is formed into the movable unit 21-1, as shown in FIG. 4. The block 21 also has a display unit 61 comprising a square liquid crystal display on the upper surface 55.

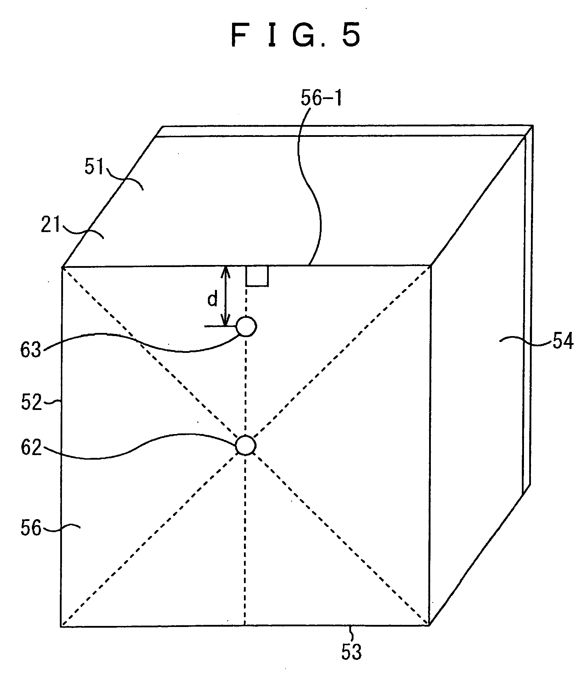

FIG. 5 is a perspective view of the block 21 of FIG. 4 as viewed from the side of the bottom surface 56. The block 21 has, at a center position (where diagonal lines of the bottom surface 56 intersect) of the bottom surface 56, an infrared detection unit 62 so as to correspond to the slot (the registration slot 32 and the reproduction slots 33 to 37) of the base unit 10 as described the above with reference to FIG. 3. Also, an infrared emission unit 63 is provided at a position on a line that bisects, at a right angle, a side 56-1 being in contact with the side surface 51 of the bottom surface 56 through the center of the bottom surface 56, specifically, at a position inner (closer to the center of the bottom surface 56) than the side 56-1 by a prescribed distance d.

Specifically, the bottom surface 56 of the block 21 has the infrared detection unit 62 at the position facing the infrared emission unit 41 shown in FIG. 3 and the infrared emission unit 63 at the position facing any of the infrared detection units 42-1 to 42-4 shown in FIG. 3 in the case of the installation of the block 21 on the registration slot 32 of the base unit 10, for instance. In this manner, in the case of the installation of the block 21 on the registration slot 32 of the base unit 10, for instance, the infrared detection unit 62 is allowed to receive an infrared signal outputted from the infrared emission unit 41, and any of the infrared detection units 42-1 to 42-4 is allowed to receive an infrared signal outputted from the infrared emission unit 63. Hereby, the infrared communication of the base unit 10 with the block 21 installed on the slot is performed.

While the block 21 has only one infrared emission unit 63, four infrared detection units 42-1 to 42-4 are provided for each slot, respectively. This arrangement is to be adapted to every installation of the block 21 in any direction to the slot (such that the infrared emission unit 63 may face any of the infrared detection units 42-1 to 42-4).

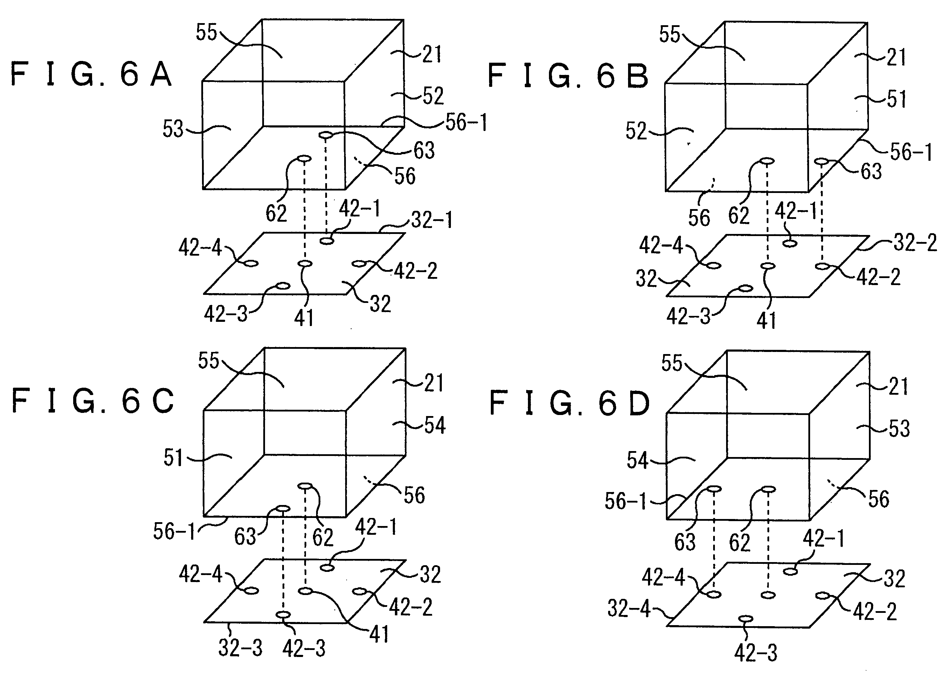

Specifically, in the case of the installation of the block 21 on the registration slot 32 in a direction that the side 56-1 and the side 32-1 are in contact with each other as shown in FIG. 6A, for instance, the infrared emission unit 63 is allowed to face the infrared detection unit 42-1 so that the infrared signal outputted from the infrared emission unit 63 is received by the infrared detection unit 42-1. In the case of the installation of the block 21 on the registration slot 32 in a direction that the side 56-1 and the side 32-2 are in contact with each other as shown in FIG. 6B, for instance, the infrared emission unit 63 is allowed to face the infrared detection unit 42-2 so that the infrared signal outputted from the infrared emission unit 63 is received by the infrared detection unit 42-2.

Further, in the case of the installation of the block 21 on the registration slot 32 in a direction that the side 56-1 and the side 32-3 are in contact with each other as shown in FIG. 6C, for instance, the infrared emission unit 63 is allowed to face the infrared detection unit 42-3 so that the infrared signal outputted from the infrared emission unit 63 is received by the infrared detection unit 42-3. In the case of the installation of the block 21 on the registration slot 32 in a direction that the side 56-1 and the side 32-4 are in contact with each other as shown in FIG. 6D, for instance, the infrared emission unit 63 is allowed to face the infrared detection unit 42-4 so that the infrared signal outputted from the infrared emission unit 63 is received by the infrared detection unit 42-4.

Thus, even if the block 21 is installed in any of the above four directions to the registration slot 32, the infrared emission unit 63 is allowedto face any of the infrared detection units 42-1 to 42-4. As described later, the block 21 is capable of storing four pieces of different information depending on the direction of the block 21. Thus, the block 21 may specify the music data to be reproduced in four kinds of patterns depending on the direction available in the case of the installation on the slot.

Incidentally, in FIG. 6, the infrared emission unit 41 of the registration slot 32 and the infrared detection unit 62 of the block 21 are respectively arranged at the center of the registration slot 32 and the block 21, so that the infrared emission unit 41 and the infrared detection unit 62 are positioned facing each other in any case of FIGS. 6A to 6D (even if the block 21 is installed in any of the above four directions to the registration slot 32).

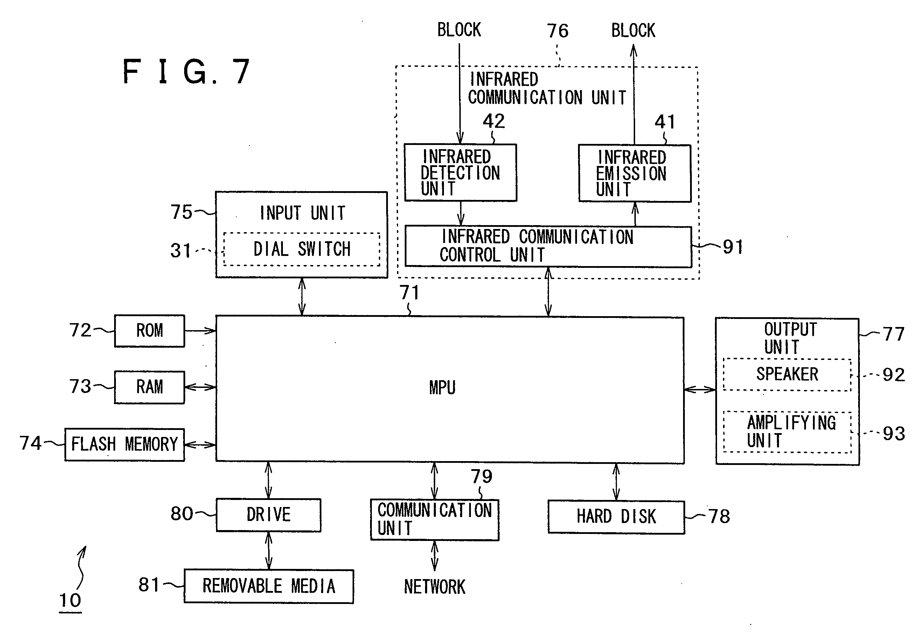

An internal configuration of the audio player 1 is now described. FIG. 7 is a block diagram showing the internal configuration of the base unit 10 in FIG. 2.

In FIG. 7, a MPU (Micro Processing Unit) 71 of the base unit 10 in FIG. 2 controls the base unit 10 overall by performing various processing according to a program and data stored in a ROM (Read Only Memory) 72 or a program and data loaded from a flash memory 74 or a hard disk 78 into a RAM (Random Access Memory) 73.

The ROM 72 is available as a read-only semiconductor memory shipped from a factory, etc. and stores a program and data to be executed by the MPU 71. The ROM 72 supplies the program and the data to the MPU 71 based on a request of the MPU 71. The RAM 73, which is available as a read-write semiconductor memory, temporarily stores the program and the data based on an instruction of the MPU 71. The flash memory 74, which is available as a non-volatile semiconductor memory capable of rewriting of data in block units, etc., for instance, stores, under the control of the MPU 71, the program and the data such as those stored in a removable media 81 installed in a drive 80, those supplied from other apparatuses through a communication unit 79 and those stored in the hard disk 78, and supplies the program and the data to the MPU 71 based on the request of the MPU 71.

The MPU 71 is also connected to an input unit 75 for accepting input from the user, and an infrared communication unit 76 for performing the infrared communication with the blocks. The input unit 75 has the above dial switch 31, starts, under the control of the MPU 71, the acceptance of the input in the dial switch 31, and supplies, to the MPU 71, the information entered by the user through the operation of the dial switch 31. The infrared communication unit 76 has, in addition to the above infrared emission unit 41 and the above infrared detection unit 42, an infrared communication control unit 91 for controlling the operation of these units. The infrared communication control unit 91 controls light emission of the infrared emission unit 41 to output, through the infrared emission unit 41, information supplied from the MPU 71, as an infrared signal, and also extracts the supplied information from the infrared signal acquired in the infrared detection unit 42 to supply the extracted information to the MPU 71. In this manner, the infrared communication unit 76 performs the infrared communication with the blocks under the control of the MPU 71.

The MPU 71 is further connected to an output unit 77 for outputting an audio signal corresponding to the music data, and the hard disk 78 available as a magnetic recording medium. The output unit 77 has a speaker 92 composed of a plurality of speakers and an amplifying unit 93 for amplifying the audio signal, and when acquiring the audio signal (reproduced data of the music data) supplied from the MPU 71, amplifies the audio signal in the amplifying unit 93 to output the amplified signal through the speaker 93. The hard disk 78 contains various data such as the music data and the program and the data to be executed by the MPU 71, and supplies the music data, the program and the data to the MPU 71 based on the request of the MPU 71.

The MPU 71 is further connected to a communication unit 79 for performing the communication with the other apparatus through a non-illustrated network and the drive 80 for acquiring various data such as the music data and programs, etc. contained in the installed removable media 81 and supplying the data and the programs to the MPU 71. The communication unit 79 is connected to the other apparatus through the network such as Internet and LAN (Local Area Network) to perform, under the control of the MPU 71, wired communication or radio communication, acquires various data such as the music data and the programs, etc. supplied from the other apparatus, and supplies the data and the programs to the MPU 71. The removable media 81 is available as a recording medium comprising a magnetic disk (including a flexible disk), an optical disk (including CD-ROM (Compact Disk-Read Only Memory) and DVD (Digital Versatile Disk)), a magneto-optical disk (including MD (Mini-Disk)) or a semiconductor memory. The drive 80 reads out, under the control of the MPU 71, the information contained in the installed removable media 81 and supplies the read-out information to the MPU 71.

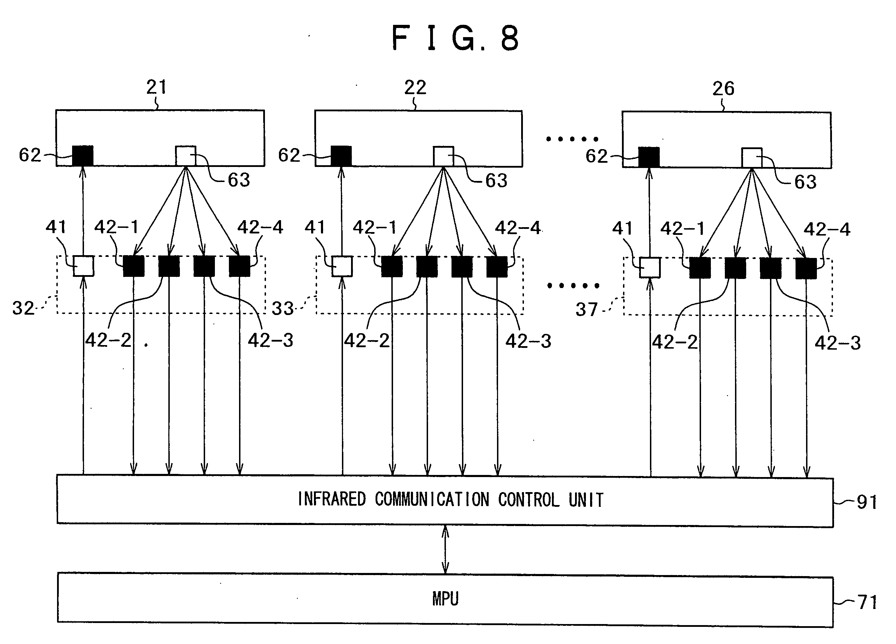

Incidentally, while the infrared communication unit 76 having one infrared emission unit 41 and one infrared detection unit 42 is merely shown in FIG. 7, it is understood that one infrared emission unit 41 and four infrared detection units 42-1 to 42-4 are provided for each of the registration slot 32 and the reproduction slots 33 to 37 as shown in FIG. 8, as a matter of fact. In each slot, the infrared emission unit 41 and the infrared detection units 42-1 to 42-4 are arranged at the positions as described the above with reference to FIG. 3.

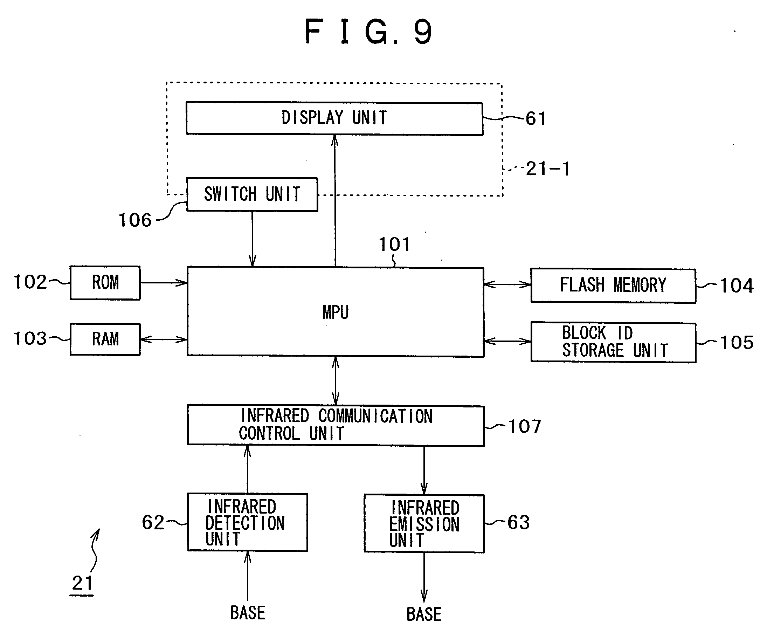

An internal configuration of the block 21 is now described. FIG. 9 is a block diagram showing an embodiment of the internal configuration of the block 21 in FIG. 4.

In FIG. 9, a MPU 101 of the block 21 controls the block 21 overall by performing various processing according to the program and the data stored in a ROM 102 or the program and the data loaded from a flash memory 104 into a RAM 103.

The flash memory 104 stores music data-related information supplied from the MPU 101, as described later, in correspondence to each of the four directions available in the case of the installation of the block 21 on the slot, and supplies the stored information to the MPU 101 based on a request of the MPU 101.

The MPU 101 is also connected to a block ID storage unit 105. The block ID storage unit 105, which is available as a read-only RAM manufactured or shipped from the factory, etc. with an ID (Identifier) for identifying the block 21, supplies information on the ID to the MPU 101 in response to the request of the MPU 101.

The block 21 has the switch as described the above, in which case, depressing the movable unit 21-1 by the user allows a switch unit 106 including the switch to output a control signal to the MPU 101.

The MPU 101 is also connected to an infrared communication control unit 107 for controlling an operation of the infrared detection unit 62 and the infrared emission unit 63. The infrared communication control unit 107 controls light emission of the infrared emission unit 63 to output, to the base unit 10 through the infrared emission unit 63, information supplied from the MPU 107, as the infrared signal, and also extracts the supplied information from the infrared signal supplied from the base unit 10 after being acquired in the infrared detection unit 62 to supply the extracted information to the MPU 101.

Incidentally, the blocks 22 to 26 shown in FIG. 1 have the same configuration as the block 21, and allow the configuration shown in FIG. 9 to be applied, so that a description on these blocks is omitted.

A specific operation of the audio player 1 is now described.

The audio player 1 acquires the music data stored in the removable media 81 or the music data supplied from the other apparatus connected through the network, and stores the acquired music data in the incorporated hard disk 78. The MPU 71 of the base unit 10 carries out the above processing by executing a music data acquisition program stored in the ROM 72, for instance.

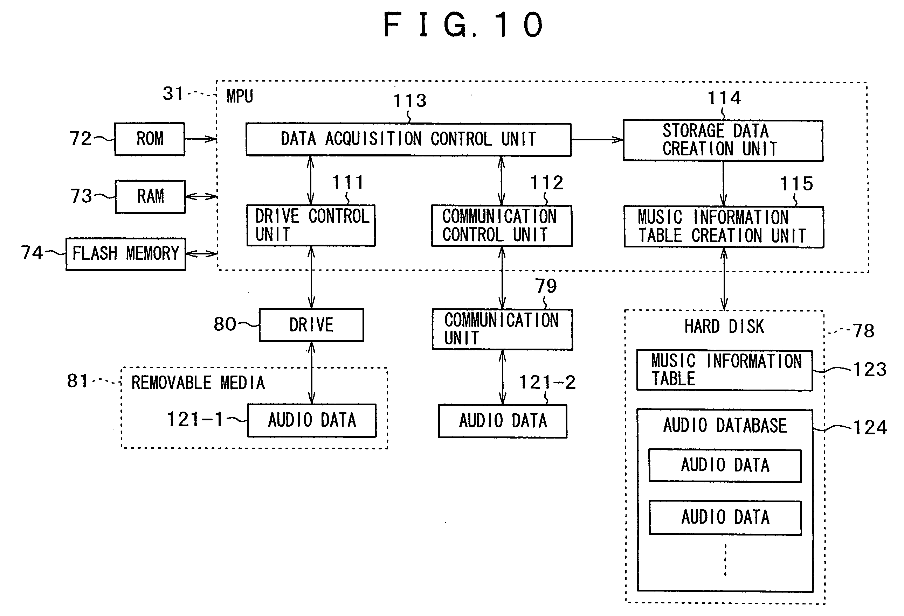

An execution of the music data acquisition program allows the MPU 71 to have various functions of a drive control unit 111 for controlling the drive, the communication control unit 112 for controlling the communication performed through the communication unit 79, a data acquisition control unit 113 for controlling a processing relating to acquisition of data, a storage data creation unit 114 for creating storage data using the acquired data, a music information table creation unit 115 for creating a music information table available as information relating to the music data to be stored and, etc., as shown in FIG. 10.

The data acquisition control unit 113 controls the drive control unit 111 to allow the removablemedia 81 installed in the drive 80 to read out audio data 121-1 (the music data), or controls the communication control unit 112 for the acquisition of audio data 121-2 (the music data) supplied through the communication unit 79. The drive control unit 111 controls the drive 80 to read out the audio data 121-1 (the music data) stored in the removable media 81 installed in the drive 80, and supplies the read-out data to the data acquisition control unit 113. The communication control unit 112 supplies, to the data acquisition control unit 113, the audio data 121-1 acquired through the communication unit 79.

When acquiring the audio data 121-1 or 121-2 from the drive control unit 111 or the communication control unit 112, the data acquisition control unit 113 supplies the acquired audio data to the storage data creation unit 114. The storage data creation unit 114 converts the audio data into a format adapted to the storage of the audio data in the hard disk 78 by applying a compression to the audio data or adding a copyright protection function to the audio data, and supplies the audio data to the music information table creation unit 115. The music information table creation unit 115 updates a music information table 123 contained in the hard disk 78, based on the acquired audio data, and supplies the updated music information table 123 to the hard disk 78 together with the audio data. The hard disk 78 creates, in a storage region thereof, an audio database 124 available as a database for the audio data, and stores the acquired audio data in the audio database 124. The hard disk 78 is further used for the storage of the supplied music information table 123.

The music information table 123 is available as a table applied to manage the audio data stored in the audio database 124, specifically, the audio data based on information such as title information of a title of music and an album title, etc. of the audio data, creation information relating to a creator and a creation date, contents information relating to the contents of a genre of the music and an artist name, etc., and category information specified by the user.

The audio player 1 registers, into the block 21 installed on the registration slot 32, information applied to reproduce the music data (the audio data) stored in the hard disk 78 as described the above, based on the user operation.

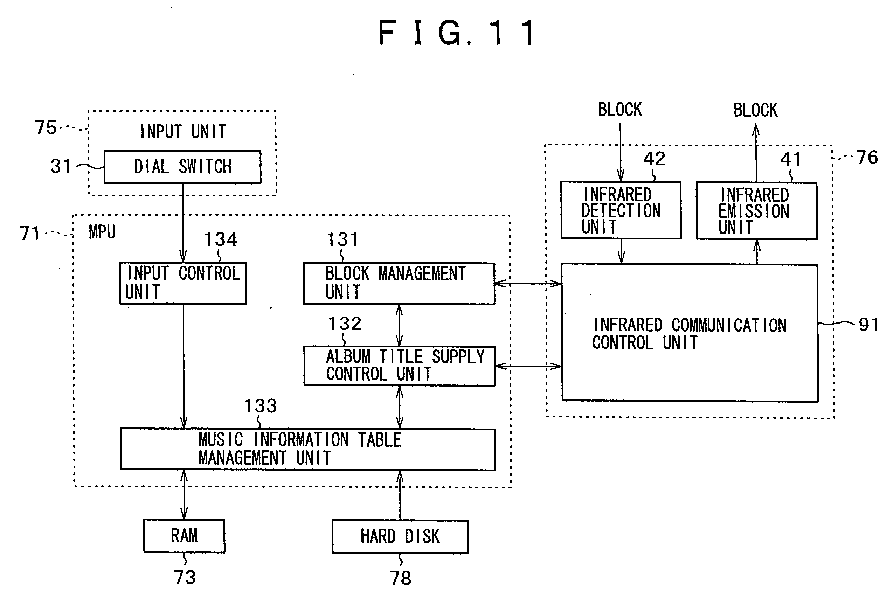

The MPU 71 of the base unit 10 performs a processing relating to a registration of the information into the block by executing a registration program stored in the ROM 72, for instance. FIG. 11 is a block diagram showing function blocks relating to the registration processing of the MPU 71.

The MPU 71 controls each unit of the infrared communication unit 76 and has a block management unit 131 for managing whether or not the block is installed on the registration slot 32, an album title supply control unit 132 for supplying, to the block installed on the registration slot 32, an album title of the music data stored in the hard disk 78, a music information table management unit 133 for managing the music information table, and an input control unit 134 for controlling the input unit 75 to acquire the control signal supplied from the input unit 75.

The block management unit 131 controls the infrared communication control unit 91 to allow the infrared emission unit 41 of the registration slot 32 to output a block detection signal at prescribed intervals. When the block 21 is installed on the registration slot 32 by the user, for instance, the MPU 101 of the block 21 acquires the block detection signal in the infrared detection unit 62 to allow the infrared emission unit 63 to output a response signal. When detecting the response signal, the infrared detection unit 42 at the position facing the infrared emission unit 63 of the block 21 supplies the response signal to the block management unit 131 through the infrared communication control unit 91. The block management unit 131 judges whether or not the block is on the registration slot 32 based on the response signal supplied from the block 21, and supplies a result of judgment to the album title supply control unit 132.

When the block is put on the registration slot 32, the album title supply control unit 132 allows the block display unit 61 to display the album title registered in the installed block, or supplies to the installed block through the infrared communication control unit 91, the album title supplied from the music information table management unit 133 for the registration of the supplied album title.

The music information table management unit 133 acquires the music information table 123 from the hard disk 78 to hold the music information table in the RAM 73 or acquires, from the music information table 123 held in the RAM 73, the album title specified by the user through the input control unit 134, and supplies the acquired album title to the album title supply control unit 132.

The input unit 134 supplies, to the music information table management unit 133, a user instruction relating to the album title to be registered into the block entered through the operation of the dial switch 31 of the input unit 75.

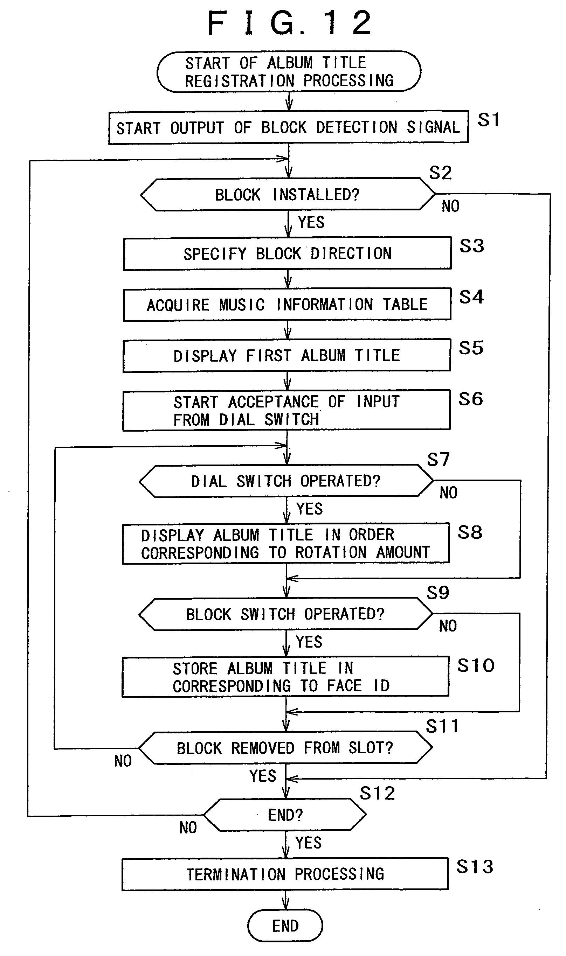

The MPU 71 allows the album title to be registered into the block installed on the registration slot 32 by performing an album title registration processing by each of the above units. The album title registration processing performed by each unit of the MPU 71 is now described with reference to a flowchart of FIG. 12. A description with reference to FIG. 3 is also given as needed. Incidentally, the processing in the case of the registration of the album title into the block 21 is described in the following. The processing for the blocks 22 to 26 is the same as that for the block 21, so that a description on the processing for these blocks is omitted.

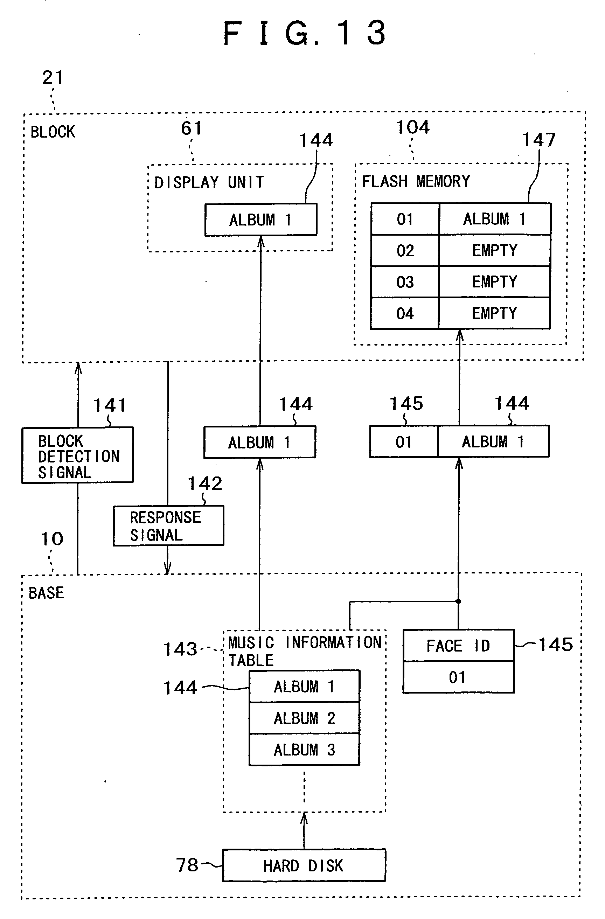

Firstly, in Step S1, the block management unit 131 controls the infrared communication control unit 91 to start output of the block detection signal. The infrared emission unit 41 of the registration slot 32 outputs the supplied block detection signal at prescribed intervals under the control of the infrared communication control unit 91. As shown in FIG. 13, a block detection signal 144 outputted from the base unit 10 is supplied to the block 21 installed on the registration slot 32. As described the above, when acquiring the block detection signal 141 in the infrared detection unit 62, the block 21 installed on the registration slot 32 outputs the response signal through the infrared emission unit 63. As shown in FIG. 13, a response signal 142 having been outputted from the block 21 is supplied to the base unit 10. When receiving the response signal 142, the infrared detection unit 42 at the position facing the infrared emission unit 63 supplies the response signal to the block management unit 131 through the infrared communication control unit 91.

In Step S2 of FIG. 12, the block management unit 131 judges whether or not the block is installed on the registration slot 32 based on the response signal. When the response signal is acquired from the infrared communication control unit 91, it is judged that the block is installed, the processing is advanced to Step S3 to specify the infrared detection unit 42 receiving the response signal among the infrared detection units 42-1 to 42-4 provided on the registration slot 32. When acquiring the response signal from the infrared detection unit 42, the infrared communication control unit 91 supplies to the block management unit 131 information relating to the infrared detection unit 42 receiving the response signal, in other words, information representing that the response signal is acquired from which of the infrared detection units 42-1 to 42-4 provided on the registration slot 32, in such a manner as to add the above information to the response signal. The block management unit 131 specifies an installation direction of the block, also specifies a face ID for identifying the specified direction based on the supplied information, and advances the processing to Step S4.

In the Step S4, the music information table management unit 133 acquires the music information table 123 stored in the hard disk 78 to hold the acquired music information table in the RAM 73, and advances the processing to Step S5. In the Step S5, the album title supply control unit 132 supplies, to the block 21 installed on the registration block 32, a first album title registered in the music information table 123 held in the RAM 73 to display the first album title on the display unit 61. Specifically, the album title supply control unit 132 requests the music information table management unit 133 to supply the first album title registered in the music information table 123. The music information table 133 acquires the first album title from the music information table 123 held in the RAM 73 based on the request, and supplies the acquired album title to the album title supply control unit 132. The album title supply control unit 132 supplies the acquired album title to the infrared communication control unit 91 to output the acquired album title through the infrared emission unit 41. As shown in FIG. 13, an album title 144 outputted as the infrared signal through the infrared emission unit 41 is supplied to the block 21 through the infrared detection unit 62 of the block 21 and is displayed as character information on the display unit 61.

When the album title is displayed on the display unit 61, the input control unit 134 starts the acceptance of input of the dial switch 31 in Step S6 of FIG. 12. Then, in Step S7, the input control unit 134 judges whether or not the dial switch is operated based on the control signal supplied from the dial switch 31 operated by the user. When the prescribed control signal is acquired from the dial switch 31, it is judged that the dial switch 31 is operated, the input control unit 134 advances the processing to Step S8 to supply, to the music table management unit 133 based on the acquired control signal, information relating to the rotation amount obtained by the turning of the dial switch 31 through the operation by the user. The music information table management unit 133 acquires an album title in the order corresponding to the rotation amount from the music information table 123 held in the RAM 73 based on the acquired information relating to the rotation amount, and supplies the acquired album title to the album title supply control unit 132. When acquiring the information relating to the album title from the music information table management unit 133, the album title supply control unit 132 supplies, to the block 21 through the infrared communication control unit 91, the acquired information relating to the album title to display the supplied information on the display unit 61 of the block 21.

Specifically, when the user turns the dial switch 31 in a prescribed direction, the album titles following the second are displayed on the display unit 61 of the block 21 in correspondence to the rotation amount. Then, when the user further turns the dial switch 31 in the prescribed direction, the further following album titles are displayed, in which case, the first album title is displayed next to the last album title. When the user turns the dial switch 31 in the reverse direction, the album titles before the presently displayed album title are displayed, in which case, the last album title is displayed next to the first album title.

When the processing of Step S8 is finished, the album title supply control unit 132 advances the processing to Step S9. Conversely, in the Step S7, when it is judged that the dial switch 31 is not operated yet, the input control unit advances the processing to the Step S9, while omitting the processing of the Step S8.

In the Step S9, the block management unit 131 judges whether or not the switch (the block switch) of the block 21 installed on the registration slot 32 is operated. When the control signal is supplied from the block 21 through the infrared communication unit 76 to represent that the switch is operated, it is judged that the movable unit 21-1 of the block 21 is depressed by the user, the block management unit 131 supplies, to the album title supply control unit 21, the face ID for identifying the installation direction of the block 21, together with the supplied information, and advances the processing to Step S10. In this Step S10, the album title supply control unit 132 supplies, to the block 21 through the infrared communication unit 76, the supplied face ID together with the album title presently displayed on the block 21, and allows the flash memory 104 to store the album title in correspondence to the face ID.

As shown in FIG. 13, the album title supply control unit 132 adds a face ID 145 to the album title 144 presently displayed on the block 21 after being acquired from the music information table 143 through the music information table management unit 133, and supplies, to the flash memory 104 of the block 21, the album title together with the added face ID. In the flash memory 104, the album title registered in correspondence to each face ID is contained, in which case, the flash memory 104 carries out the storage by making the album title 144 acquired from the base unit 10 to correspond to the face ID 145 acquired from the base unit 10.

The album title supply control unit 132 having finished the processing of the Step S10 advances the processing to Step S11. Conversely, when it is judged that the switch (the block switch) of the block 21 is not operated yet in the Step S9, the block management unit 131 advances the processing to the Step S11.

In the Step S11, the block management unit 131 judges, based on the response signal supplied from the infrared communication control unit 91, whether or not the block 21 is removed from the registration slot 32, and when the response signal is kept supplying, it is judged that the block 21 is still on the registration slot 21, and the block management unit 131 returns the processing to the Step S7 to repeat the processing following the Step S7. Conversely, in the Step S11, when it is judged that the block 21 is removed from the registration slot 32 by detecting stop supply of the response signal, the processing is advanced to Step S12.

When it is judged in the Step S2 that no block is installed, the block management unit 131, also advances the processing to the Step S12. In the Step S12, the block management unit 131 judges whether or not the album title registration processing brings to an end, and when it is judged that the album title registration processing does not bring to the end, the block management unit 131 returns the processing to the Step S2 to repeat the processing following the Step S2. Conversely, in the Step S12, when it is judged that the album title registration processing brings to the end based on the user instruction, etc., the block management unit 131 ends the album title registration processing after a termination processing in Step S13.

The registration of the album title of the music data into the hard disk 78 is performed in this manner, whereby the audio player 1 enables the reproduction of the music data corresponding to the registered album title in the case of the installation of the block 21 on the reproduction slot of the base unit 10, as described later. Hereby, the audio player 1 may manage more easily and output the massively stored contents data.

Further, the base unit 10 allows for the registration of the album title into the block 21 in correspondence to the installation direction of the block 21 as described the above, so that the audio player 1 enables the registration of a plurality of album titles in one block. Hereby, the user may control the music data to be reproduced only by controlling the installation direction of the block. The control of the music data in this manner enables the audio player 1 to manage more easily and output the massively stored contents data.

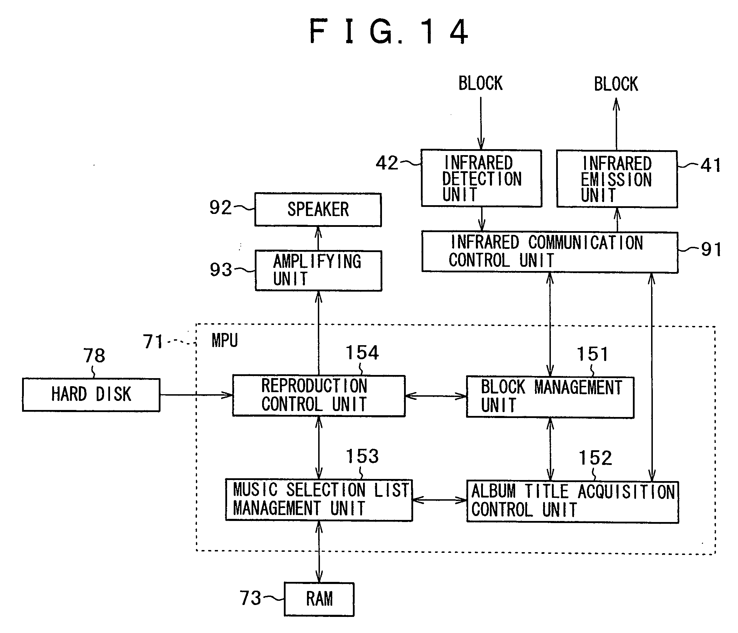

A processing to reproduce the music data corresponding to the album titles registered in the blocks installed on the reproduction slots 33 to 37 is now described. Based on the information registered in the blocks, the MPU 71 of the base unit 10 performs the processing relating to the reproduction by executing a reproduction program stored in the ROM 72, for instance. FIG. 14 is a block diagram showing function blocks relating to the music data reproduction processing in the MPU 71.

The MPU 71 has a block management unit 151 for managing the blocks installed on the reproduction slots 33 to 37, an album title acquisition control unit 152 for acquiring the album titles from the blocks installed on the reproduction slots 33 to 37, a music selection list management unit 153 for managing a music selection list available as a list of the album titles read out from the blocks installed on the reproduction slots 33 to 37 and a reproduction control unit 154 for performing a processing relating to the reproduction of the music data.

The block management unit 151 manages a condition of the blocks installed on the reproduction slots 33 to 37 by outputting the block detection signal through the infrared communication control unit 91 or acquiring the response signal corresponding to the block detection signal. The album title acquisition control unit 152 performs the processing to acquire, through the infrared communication control unit 91, the album titles registered in the blocks installed on the reproduction slots 33 to 37. The music selection list management unit 153 manages the music selection list available as the list of the album titles acquired from the album title acquisition control unit 152 in such a manner as to hold the music selection list in the RAM 73. The reproduction control unit 154 acquires the music data stored in the hard disk 78, and allows the speaker 92 to output, through the amplifying unit 92, the audio signal corresponding to the acquired music data.

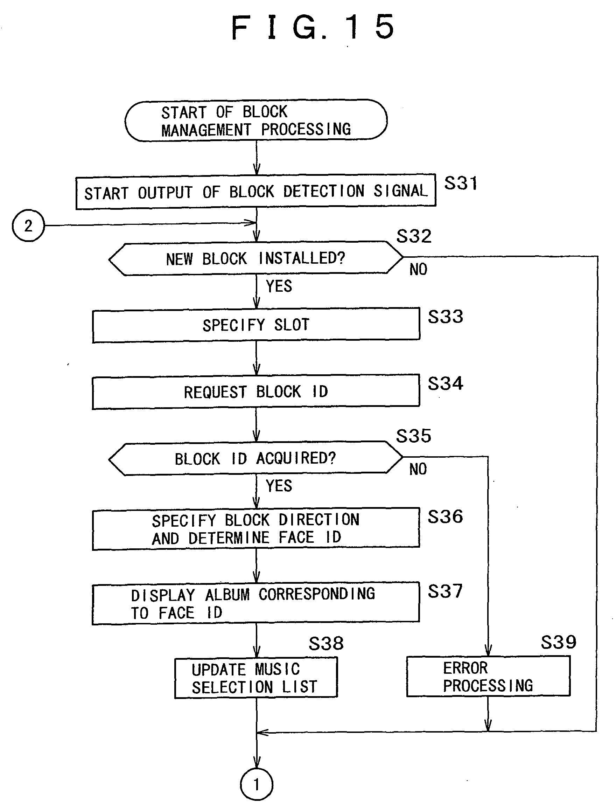

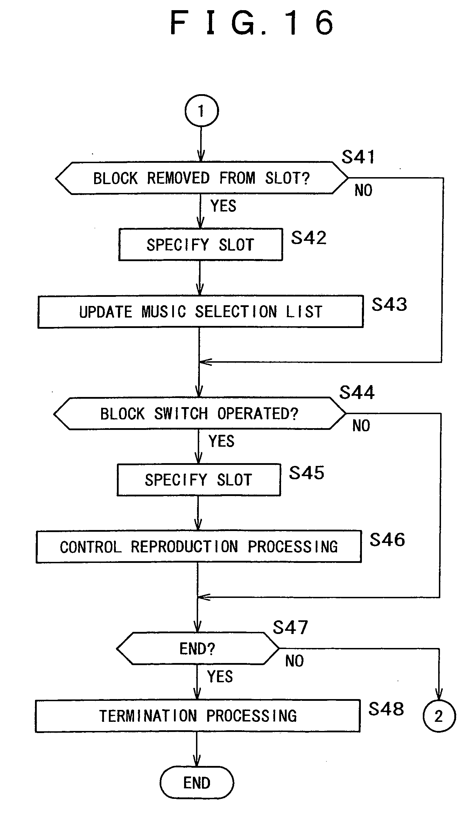

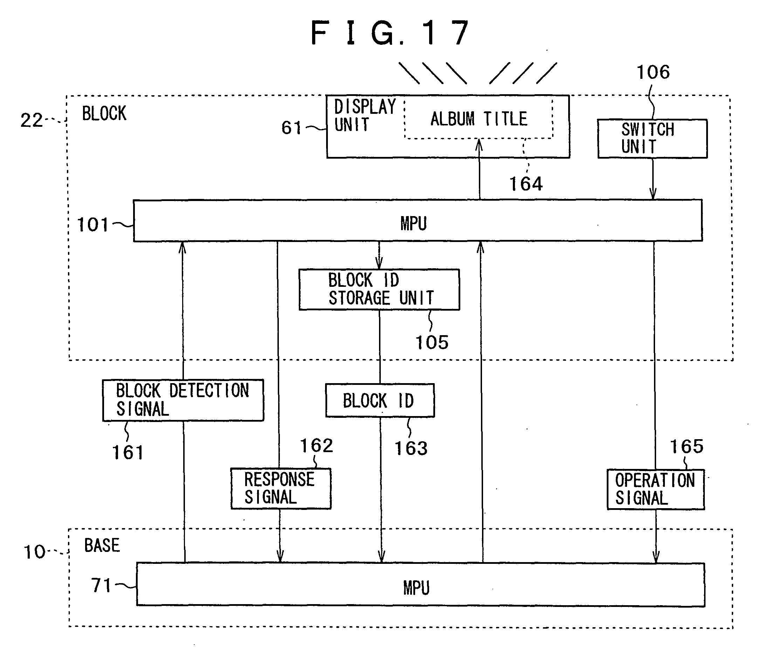

Each unit of the MPU 71 manages the blocks installed on the reproduction slots 33 to 37 by performing a block management processing. The block management processing is now described with reference to flowcharts of FIGS. 15 and 16. A description with reference to FIG. 17 is also given as needed. Incidentally, the processing in the case of the installation of the block 22 on the reproduction slot 33 is described in the following.

Firstly, in Step S31, the block management unit 151 supplies the block detection signal to the infrared communication control unit 91 to start output of the block detection signal. The infrared communication control unit 91 receiving the block detection signal controls the infrared emission unit 41 to output the block detection signal as the infrared signal. When the block 22 is installed on the reproduction slot 33 by the user, the infrared detection unit 62 of the block 22 acquires the block detection signal outputted from the infrared emission unit 41. The MPU 101 of the block 22 allows the infrared emission unit 63 to output the response signal in response to the block detection signal. When acquiring the response signal, the infrared detection unit 42 at the position facing the infrared emission unit 63 supplies the acquired response signal to the block management unit 151 through the infrared communication control unit 91.

As shown in FIG. 17, a block detection signal 161 outputting from (the block management unit 151 of) the MPU 71 of the base unit 10 is supplied to the MPU 101 of the block 22. The MPU 101 of the block 22 outputs a response signal 162 based on the block detection signal. The response signal 162 is supplied to (the block management unit 151) the MPU 71 of the base unit 10.

In Step S32 of FIG. 15, the block management unit 151 judges whether or not a new block is detected based on the response signal. When the response signal supplied from the infrared detection unit 42 of the reproduction slot 33 judging that the block 22 is not installed because of no detection of the response signal until now, it is judged that the new block 22 is installed, the block management unit 151 advances the processing to Step S33 to specify the slot receiving the response signal. The infrared communication control unit 91 supplies, to the block management unit 151, information relating to the infrared detection unit 42 acquiring the response signal, specifically, information representing which infrared detection unit 42 of which slot receives the response signal, together with the supplied response signal. The block management unit 151 specifies, based on the supplied information, the slot applied to the installation of the block.

The block management unit 151 specifying the slot advances the processing to Step S34 to request the newly installed block to supply the block ID through the infrared communication control unit 91. The MPU 101 of the block requested the block ID supplies, to the base unit 10, a block ID 163 stored in the block ID storage unit 105 in response to the request, as shown in FIG. 17.

In Step S35 of FIG. 15, the block management unit 151 requesting the block ID judges, after a lapse of a prescribed period of time, whether or not the block ID is acquired. When with the block ID supplied through the infrared communication control unit 91, it is judged that the block ID is acquired, the block management unit 151 specifies, in Step S36, the direction of the block and determines a face ID of that block based on the information supplied together with the response signal. The block management unit 151 determining the face ID supplies, to the album title acquisition control unit 152, information relating to the block 22 such as the face ID thereof. The album title acquisition control unit 152 controls, in Step S37, the infrared communication control unit 91 based on the supplied information to display, on the display unit 61, the album title registered in the block 22 in correspondence to the face ID of the block. As shown in FIG. 17, (the album control unit 152) the MPU 71 of the base unit 10 controls the infrared communication control unit 91 to request the newly installed block 22 to display the album title corresponding to the face ID. The MPU 101 of the block 22 allows, based on the request, the album title 164 corresponding to the supplied face ID, among the album titles stored in the flash memory 104, to be displayed on the display unit 61.

The album title acquisition control unit 152 also requests the block 22 to supply the displayed album title through the infrared communication control unit 91 and acquires the displayed album title. The album title acquisition control unit 152 supplies the acquired album title to the music selection list management unit 153. In Step S38, the music selection list management unit 153 updates the music selection list held in the RAM 73 using the supplied album title, and advances the processing to Step S41 of FIG. 16.

Conversely, in the Step S35 of FIG. 15, when it is judged that no block ID is acquired, the block management unit 151 advances the processing to Step S39 to perform an error processing, and thereafter advances the processing to Step S41 of FIG. 16. Further, in the Step S32 of FIG. 15, when no response signal is acquired, it is judged that no new block is installed, the block management unit 151 advances the processing to the Step S41 of FIG. 16.

In the Step S41 of FIG. 16, the block management unit 151 judges whether or not the block is removed from the slot based on the response signal. When the supply of the response signal is stopped and, it is judged that the block is removed from the reproduction slot, the block management unit 151 specifies, in Step S42, the reproduction slot judged that the block is removed, and supplies information on the specified reproduction slot to the music selection list management unit 153. The music selection list management unit 153 updates, in Step S43, the music selection list based on the supplied information, in which case, the album title corresponding to the removed block is deleted from the music selection list. The music selection list management unit 153 finishing the processing of the Step S43 advances the processing to Step S44. Conversely, in the Step S41, when it is judged that no block is removed from the slot, the block management unit 151 advances the processing to the Step S44.

In the Step S44, the block management unit 151 judges whether or not the switch (the block switch) of the block installed on the reproduction slot is operated. As shown in FIG. 17, depressing the movable unit of the block by the user allows the switch unit 106 to supply, to the MPU 71 of the base unit 10 through the MPU 101, information relating to the switch operation, as an operation signal 165. When the operation signal 165 is acquired, it is judged that the block switch is operated, the block management unit 151 advances the processing to Step S45 to specify, based on the information supplied from the infrared communication control unit 91 together with the operation signal 165, the slot is applied to the installation of that block, and supplies, to the reproduction control unit 154, information relating to the reproduction. In Step S46, the reproduction control unit 154 controls, based on the supplied information, the music data reproduction processing with reference to the music selection list through the music selection list management unit 153.

The reproduction control unit 154 finishing the processing of the Step S46 advances the processing to Step S47. Conversely, in the Step S44, when it is judged that the block switch is not operated yet, the block management unit 151 advances the processing to the Step S47.

In the Step S47, the block management unit 151 judges whether or not the block management processing brings to the end, and when it is judged that the block management processing does not bring to the end, the block management unit 151 returns the processing to the Step S32 of FIG. 15 to repeat the processing following the Step S32. Conversely, in the Step S47, when it is judged that the block management processing brings to the end based on the user instruction, etc., the block management unit 151 ends the block management processing after a termination processing in Step S48.

The management of the blocks installed on the reproduction slots is performed as described the above, whereby the audio player 1 enables the reproduction of the music data corresponding to the album title registered in the block 21. Hereby, the audio player 1 may manage more easily and output the massively stored contents data.

Further, the base unit 10 detects the reproduction slot applied to the installation of the block and the installation direction of the block, so that the user may control the music data to be reproduced only by controlling the slot for the installation of the block and the installation direction thereof. The control of the music data in this manner enables, the audio player 1 to manage more easily and to output the massively stored contents data.

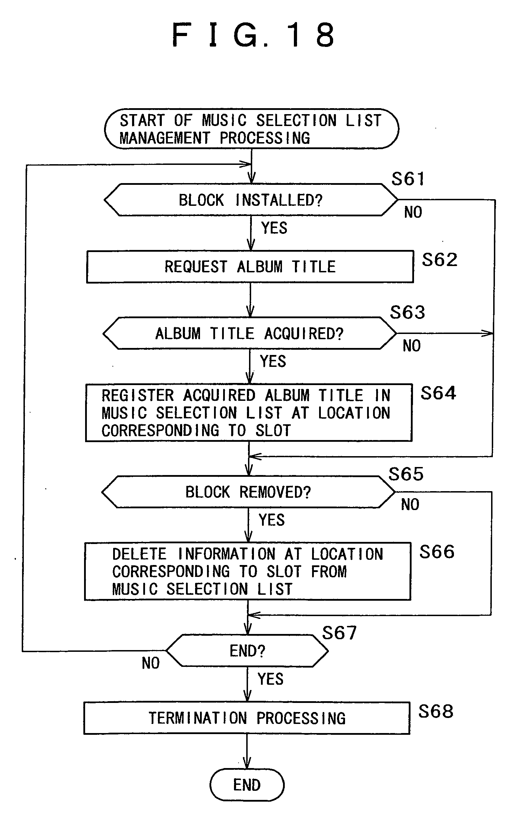

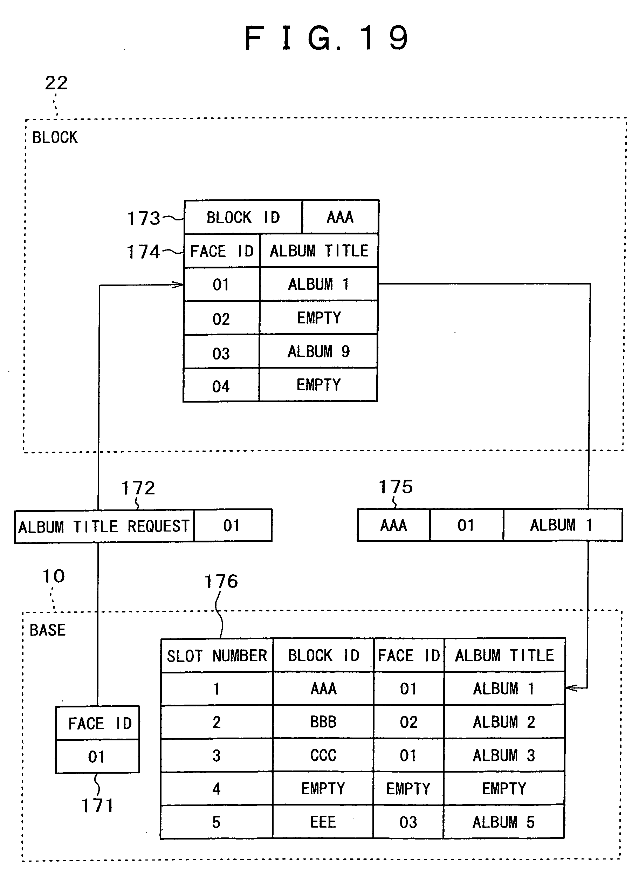

A music selection list management processing performed to update the music selection list is now described with reference to a flowchart of FIG. 18. A description with reference to FIG. 19 is also given as needed. Incidentally, this processing corresponds to the Step S38 of FIG. 15 and the Step S43 of FIG. 16.

Firstly, in Step S61, the block management unit 151 judges whether or not the block is installed on the reproduction slot. This processing corresponds to the Step S32 of FIG. 15. When it is judged that the block is installed, the block management unit 151 supplies information relating to the installed block to the album title acquisition control unit 152, and advances the processing to Step S62.

In the Step S62, the album title acquisition control unit 152 requests, through the infrared communication control unit 91, the newly installed block to supply the album title corresponding to the face ID representing the installation direction of the newly installed block. In Step S63, after a lapse of a prescribed period of time, the album title acquisition control unit 152 judges whether or not the album title is acquired, and when it is judged that the album title is acquired, the album title acquisition control unit 152 supplies information relating to the acquired album title to the music selection list management unit 153, before advancing the processing to Step S64. In the Step S64, the music selection list management unit 153 registers the acquired album title, in the music selection list held in the RAM, at a location corresponding to the specified slot, and advances the processing to Step S65.

As shown in FIG. 19, the base unit 10 supplies an album title request 172 together with the face ID 171 to the newly installed block 22. When acquiring the request, the block 22 acquires, from an album title database 174, the supplied face ID and the album title corresponding to the supplied face ID, and supplies the face ID and the album title together with a stored block ID 173 to the base unit 10, as album title information 175. The base unit 10 updates a corresponding portion of the music selection list 176 based on the supplied album title information.

Conversely, in the Step S61, when it is judged that no block is installed, the block management unit 151 advances the processing to the Step S65. Further, in the Step S63, when it is judged that no album title is acquired, the album title acquisition control unit 152 advances the processing to the Step S65.

In this Step S65, the block management unit 151 judges whether or not the block is removed from the reproduction slot. When it is judged that the block is removed, themusic selection list management unit 153 deletes the information at the location corresponding to the slot from the music selection list in Step S66, and advances the processing to Step S67. Conversely, in the Step S65, when it is judged that no block is removed from the slot, the blockmanagement unit 151 advances the processing to the Step S67.

In the Step S67, the block management unit 151 judges whether or not the music selection list management processing brings to the end, and when it is judged that the music selection list management processing does not bring to the end, the block management unit 151 returns the processing to the Step S61 to repeat the processing following the Step S61. Conversely, in the Step S67, based on the user instruction, etc., when it is judged that the music selection list management processing brings to the end, the block management unit 151 ends the music selection list management processing after a termination processing in Step S68.

The management of the album titles registered in the blocks installed on the reproduction slots is performed as the music selection list as described the above, whereby the audio player 1 enables the reproduction of the music data corresponding to the album title registered in the block 21, as described later. Hereby, the audio player 1 may manage more easily and output the massively stored contents data.

Further, the base unit 10 manages the music selection list depending on the slot applied to the installation of the block and the installation direction thereof as described the above, so that the user may control the music data to be reproduced only by controlling the slot for the installation of the block and the installation direction thereof. The control of the music data in this manner enables the audio player 1 to manage more easily and output the massively stored contents data.

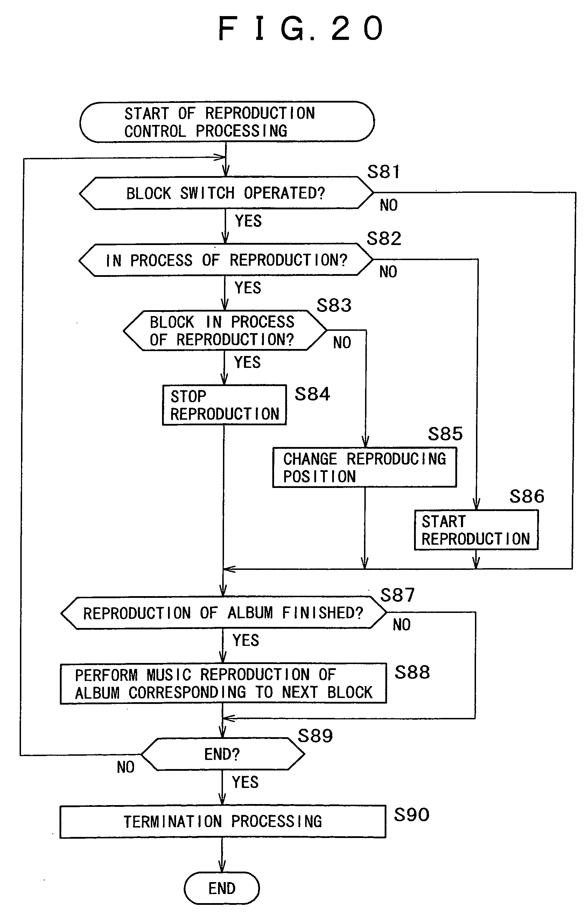

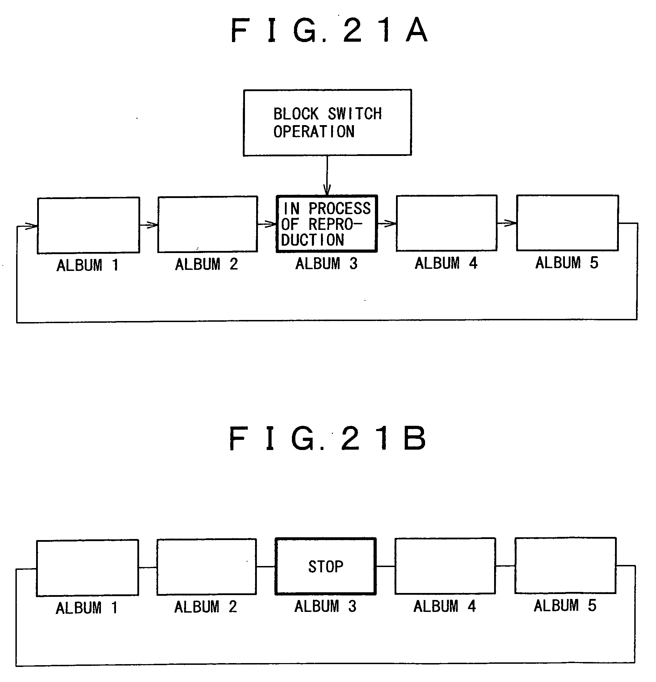

A reproduction control processing performed to reproduce the music data is now described with reference to a flowchart of FIG. 20. A description with reference to FIGS. 21 to 24 is also givenas needed. Incidentally, this processing corresponds to the processing of the Step S46 of FIG. 16.

Firstly, in Step S81, the block management unit 151 judges whether or not the switch (the block switch) of the block installed on each of the reproduction slots 33 to 37 is operated. When it is judged that the block switch is operated, the reproduction control unit 154 judges in Step S82 whether or not the block is in the process of reproduction of the music data. When it is judged that the block is in the process of reproduction of the music data, the reproduction control unit 154 advances the processing to Step S83 to judge whether or not the block whose switch is operated is a block corresponding to the music data being in the process of reproduction. When it is judged that the block whose switch is operated is the block being in the process of reproduction of the music data, the reproduction control unit 154 advances the processing to Step S84 to stop the reproduction of the music data, and further advances the processing to Step S87.

When the switch of the block corresponding to the music data being in the process of reproduction (an album 3 corresponding to the music data being in the process of reproduction) is operated as shown in FIG. 21A, for instance, the reproduction control unit 154 stops the reproduction of the music data being in the process of reproduction (the reproduction of the music data corresponding to the album 3), as shown in FIG. 21B.

Conversely, in the Step S83, when it is judged that the block whose switch is operated is not the block corresponding to the music data being in the process of reproduction, the reproduction control unit 154 advances the processing to Step S85 to change a reproducing position of the music data in the music selection list, that is, the music data to be reproduced, and further advances the processing to Step S87.

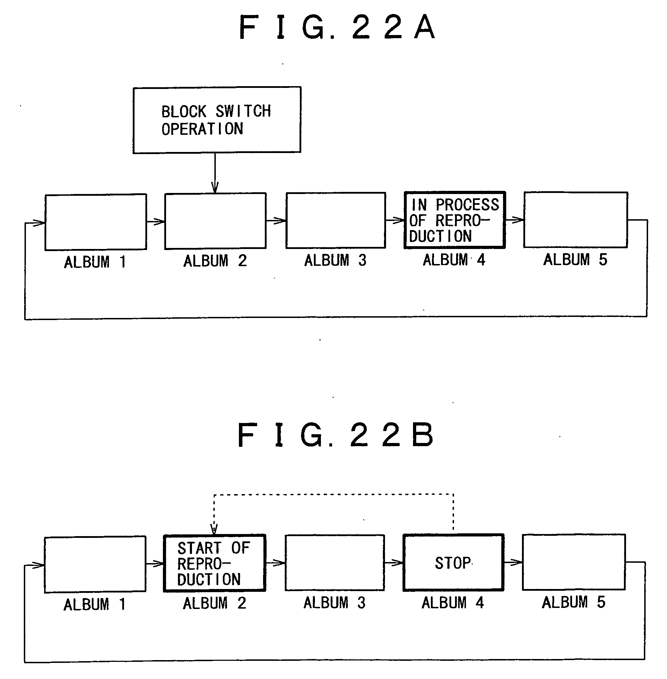

When the switch of the block corresponding to an album 2 is operated in the process of reproduction of the music data corresponding to an album 4 as shown in FIG. 22A, for instance, the reproduction control unit 154 stops the reproduction of the music data corresponding to the album 4, shifts the reproducing position, and starts the reproduction with the first music data corresponding to the album 2, as shown in FIG. 22B.

Conversely, in the Step S82, when it is judged that the block is not in the process of reproduction of the music data, the reproduction control unit 154 advances the processing to Step S86 to start the reproduction with the music data (the music data contained in the album corresponding to the block) corresponding to the block whose switch is operated, and further advances the processing to the Step S87.

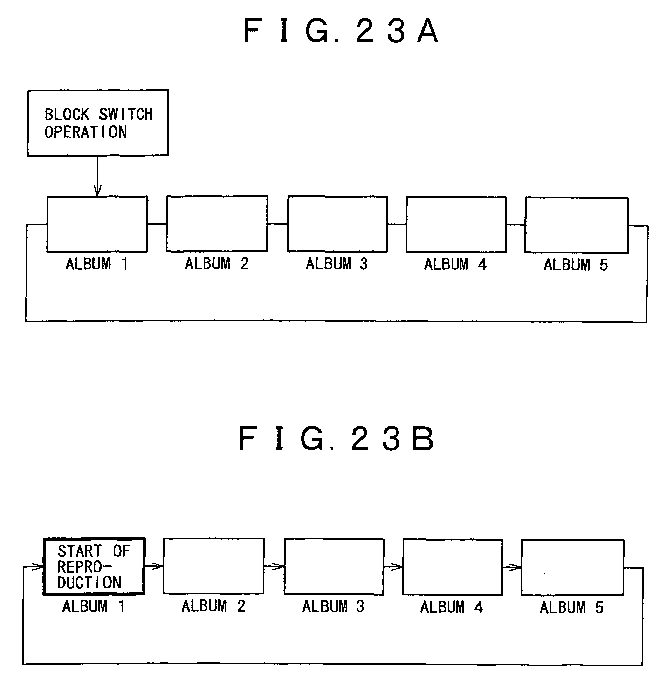

When no reproduction is performed, the switch of the block corresponding to the album 1 is operated as shown in FIG. 23A, for instance, the reproduction control unit 154 starts the reproduction with the first music data corresponding to the album 1 as shown in FIG. 23B.

Referring back to FIG. 20, the reproduction control unit 154 advancing the processing to the Step S87 judges whether or not the reproduction of the album, that is, the reproduction of all the music data corresponding to one album is finished. When it is judged that the reproduction is finished, the reproduction control unit 154 reproduces, the music (the music data) of the album corresponding to the next block with reference to the music selection list through the music selection list management unit 153 in Step S88, and advances the processing to Step S89.

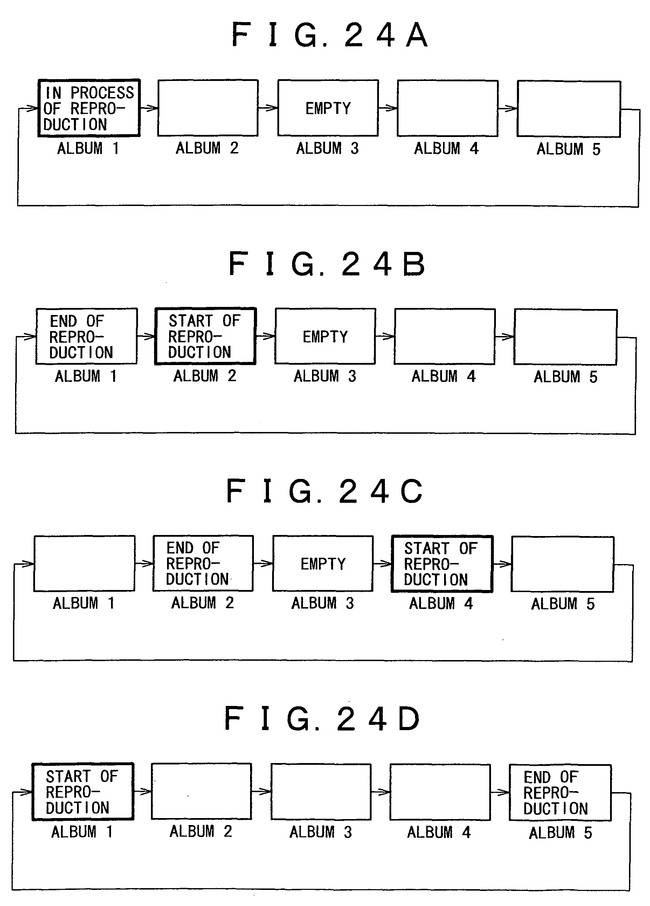

When assumed to be reproducing the music data contained in the album 1 as shown in FIG. 24A, the reproduction control unit 154, for instance, starts the reproduction with the first music data (the first music) of the album 2 specified as the next album, after the reproduction of the music data contained in the album 1 is finished as shown in FIG. 24B. In this manner, the reproduction control unit 154 performs the reproduction in order from the album 1 to the album 5. However, when the album 3 is in an empty condition because of the absence of the information of the album 3 in the music selection list as shown in FIG. 24C for reason that no block is installed on the reproduction slot or no album title is registered in the installed block, for instance, the reproduction control unit 154 starts the reproduction with (the first music data of) the album 4 by specifying the next album as the album 4 after the reproduction of the album 2 is finished. Then, when the reproduction of the album 5 is finished, the reproduction control unit 154 resets the album to be reproduced to the album 1 specified as the first album of the music selection list, and starts the reproduction with the first music data of the album 1.

Referring back to FIG. 20, in the Step S87, when it is judged that the reproduction of the album is not finished, the reproduction control unit 154 advances the processing to the Step S89, while omitting the processing of the Step S88. In the Step S89, the reproduction control unit 154 judges whether or not the reproduction control processing brings to the end, and when it is judged that the reproduction control processing does not bring to the end, the reproduction control unit 154 returns the processing to the Step S81 to repeat the processing following the Step S81. Conversely, in the Step S89, when it is judged that the reproduction control processing brings to the end based on the user instruction, etc., the reproduction control unit 154 ends the reproduction control processing after a termination processing in Step S90.

The reproduction of the music data corresponding to the album titles registered in the blocks installed on the reproduction slots is performedas describedthe above, whereby the audio player 1 may more easily manage, and output the massively stored contents data.

Further, the base unit 10 controls the music data to be reproduced depending on the slot applied to the installation of the block 21 and the installation direction thereof as described the above, so that the user may control the music data to be reproduced only by controlling the slot for the installation of the block and the installation direction thereof. The control in this manner enables the audio player 1 to more easily manage, and output the massively stored contents data.

A block processing corresponding to the processing for the base unit 10 is now described. Incidentally, the blocks 21 to 26 are the same in configuration, and allow the same processing to be applied, so that the processing only for the block 21 is described in the following, while omitting a description on the processing for the blocks 22 to 26.

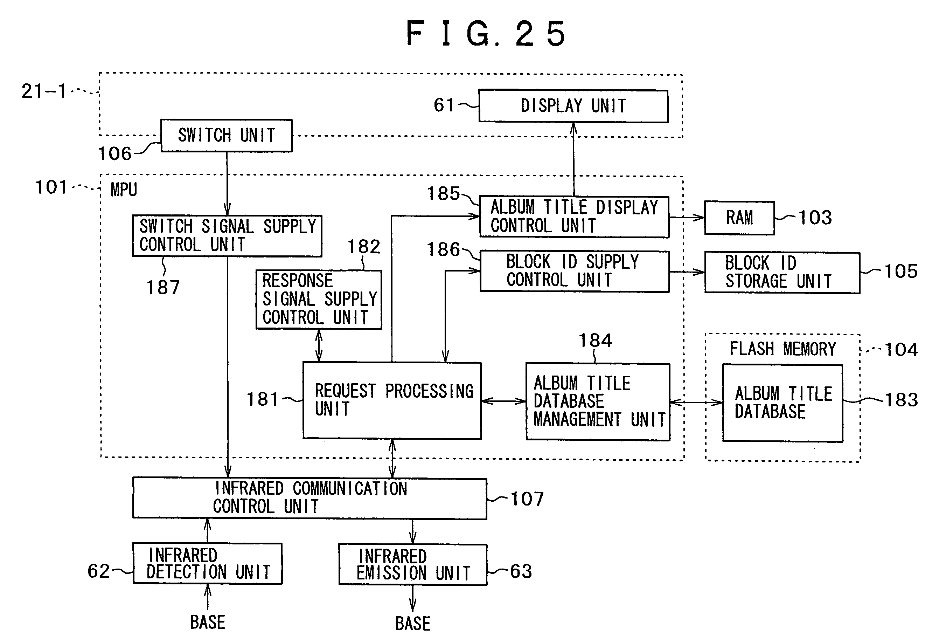

The MPU 101 of the block 21 has various function blocks as shown in FIG. 25, and perform various processing by executing a program stored in the ROM 102, for instance.

A request processing unit 181 acquires various requests supplied from the base unit 10 through the infrared communication control unit 91, and performs the processing corresponding to these requests. A response signal supply control unit 182 controls the supply of the response signal corresponding to the block detection signal supplied from the base unit 10 under the control of the request processing unit 181. An album title database management unit 184 manages information of an album title database 183 stored in the flash memory 104 and applied to establish a correspondence between the album title and the face ID, and supplies information such as the album title registered in the album title database 193 to the request processing unit 181 based on the request from the request processing unit 181. An album title display control unit 185 controls the display of the album title using the display unit 61 under the control of the request processing unit 181 by holding the supplied album title in the RAM 103. A block ID supply control unit 186 reads out the block ID stored in the block ID storage unit 105, and supplies the read-out block ID to the request processing unit 181 under the control of the request processing unit 181. A switch signal supply control unit 187 supplies a switch signal supplied from the switch unit 106 to the infrared communication control unit 107 through the operation of the movable unit 21-1 by the user.

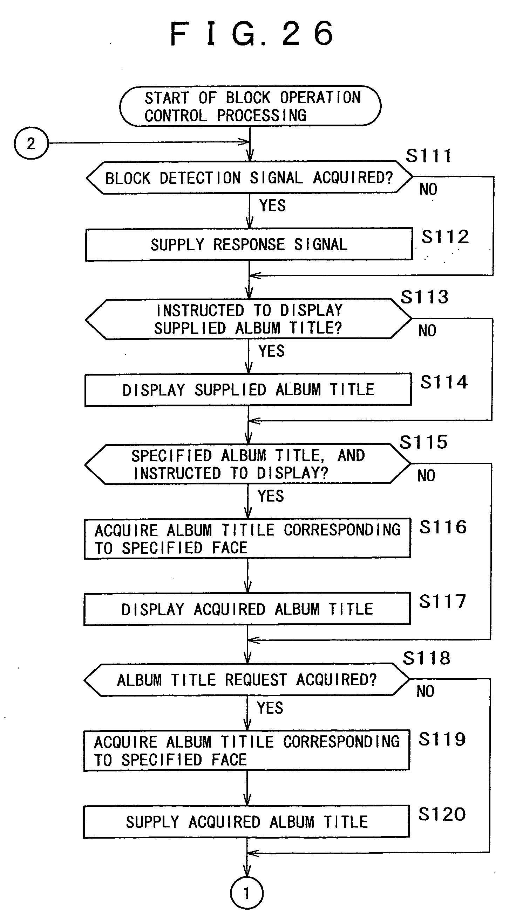

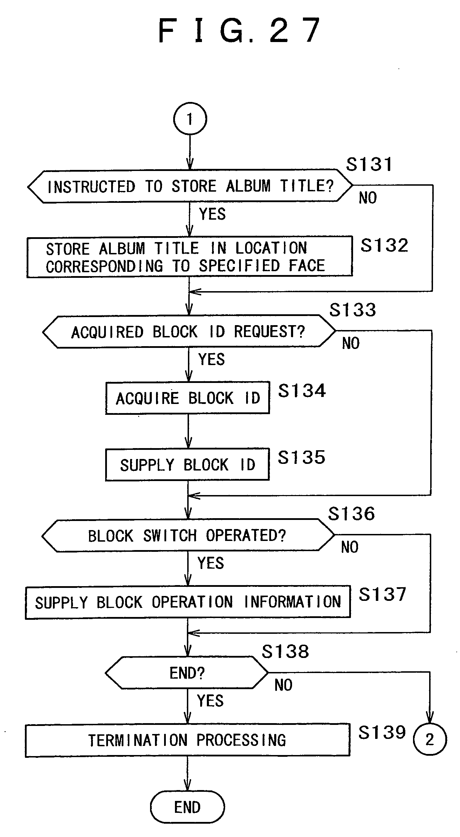

Each function block configured as described the above controls the operation of the block 21 by performing a block operation control processing. The block operation control processing is now described with reference to flowcharts of FIGS. 26 and 27.

Firstly, in Step S111, the request processing unit 181 judges whether or not the block detection signal supplied from the base unit 10 is acquired through the infrared communication control unit 107. This processing corresponds to the Step S1 of FIG. 12 or the Step S31 of FIG. 15, for instance. When it is judged that the block detection signal is received in the infrared detection unit 62 and acquired through the infrared communication control unit 107, the request processing unit 181 advances the processing to Step S112 to acquire the response signal from the response signal supply control unit 182, and controls the infrared communication control unit 107 to supply the response signal to the base unit 10 through the infrared emission unit 63. The request processing unit 181 having finished the processing of the Step S112 advances the processing to Step S113. Conversely, in the Step S111, when it is judged that no block detection signal is acquired, the request processing unit 181 advances the processing to Step S113, while omitting the processing of the Step S112.

In the Step S113, the request processing unit 181 judges whether or not when the album title is supplied from the base unit 10 through the infrared communication control unit 107, the display of the supplied album title is instructed. This processing corresponds to the Step S5 of FIG. 12 or the Step S8 of FIG. 12, for instance. When the album title is supplied, it is judged that the display of the supplied album title is controlled, the request processing unit 181 advances the processing to Step S114. In the Step S114, the album title display control unit 185 allows the RAM 103 to hold the supplied album title, and supplies the held album title as character information to the display unit 61 for displaying. The album title display control unit 185 having finished the processing of the Step S114 advances the processing to Step S115. Conversely, in the Step S113, when it is judged that the display of the supplied album title is not instructed, the request processing unit 181 advances the processing to the Step S115, while omitting the processing of the Step S114.

In the Step S115, the request processing unit 181 judges whether or not when the album title is specified by the base unit 10 through the infrared communication control unit 107, the display of the specified album title is instructed. This processing corresponds to the Step S37 of FIG. 15, for instance. When the album title is specified, it is judged that the display of the specified album title is instructed, the request processing unit 181 advances the processing to Step S116 to control the album title database management unit 184, acquires the specified album title from the album title database 183 stored in the flash memory 104, and supplies the acquired album title to the album title display control unit 185. In Step S117, the album title display control unit 185 allows the RAM 103 to hold the album title supplied from the request processing unit 181, and supplies the held album title, as the character information, to the display unit 61 for displaying. The album title display control unit 185 having finished the processing of the Step S117 advances the processing to Step S118. Conversely, in the Step S115, when it is judged that the display of the specified album title is not instructed, the request processing unit 181 advances the processing to the Step S118, while omitting the processing of the Steps S116 and S117.

In the Step S118, the request processing unit 181 judges whether or not when the album title is specified by the base unit 10 through the infrared communication control unit 107, the supply of the specified album title is requested. This processing corresponds to the Step S62 of FIG. 18, for instance. When the album title is specified, it is judged that the supply of the specified album title is instructed, the request processing unit 181 advances the processing to Step S119 to control the album title database management unit 184, and acquires the specified album title from the album title database 183 stored in the flash memory 104. In Step S120, the request processing unit 181 supplies the acquired album title to the base unit 10 through the infrared communication control unit 107. The request processing unit 181 having finished the processing of the Step S120 advances the processing to Step S131 in FIG. 27. Conversely, in the Step S118 of FIG. 26, when it is judged that no album title is requested, the request processing unit 181 advances the processing to Step S131 of FIG. 27, while omitting the processing of the Steps S119 and 120.

In the Step S131 of FIG. 27, the request processing unit 181 judges whether or not, when the album title is supplied from the base unit 10 through the infrared communication control unit 107, the storage of the supplied album title is instructed. This processing corresponds to the Step S10 of FIG. 12, for instance. When the album title is supplied, it is judged that the storage of the supplied album title is instructed, the request processing unit 181 advances the processing to Step S132 to control the album title database management unit 184, and stores the supplied album title, in the album title database 183 stored in the flash memory 104, at a location corresponding to a specified face. The request processing unit 181 having finished the processing of the Step S132 advances the processing to Step S133. Conversely, in the Step S131, when it is judged that the storage of the supplied album title is not instructed, the request processing unit 181 advances the processing to Step S133, while omitting the processing of the Step S132.

In the Step S133, the request processing unit 181 controls the infrared communication control unit 107 to judge whether or not a block ID request is acquired. This processing corresponds to the Step S34 of FIG. 15, for instance. When it is judged that the block ID request is acquired, the request processing unit 181 advances the processing to Step S134 to control the block ID supply control unit 186, acquires the block ID stored in the block ID storage unit 105, and supplies the acquired block ID to the base unit 10 through the infrared communication control unit 107 in Step S135. The request processing unit 181 having finished the processing of the Step S135 advances the processing to Step S136. Conversely, in the Step S133, when it is judged that no block ID request is acquired, the request processing unit 181 advances the processing to the Step S136, while omitting the processing of the Steps S134 and S135.

In the Step S136, the switch signal supply control unit 187 judges, based on the switch signal supplied from the switch unit 106, whether or not the block switch is operated by the user (the movable unit 21-2 is depressed) , and when it is judged that the block switch is operated, advances the processing to Step S137 to supply, to the base unit 10 through the infrared communication control unit 107 based on the switch signal, block operation information representing that the block switch is operated. The switch signal supply control unit 187 having finished the processing of the Step S137 advances the processing to Step S138. Conversely, in the Step S136, when it is judged that the block switch is not operated yet, the switch signal supply control unit 187 advances the processing to the Step S138, while omitting the processing of the Step S137.

In the Step S138, the request processing unit 181 judges whether or not the block operation control processing brings to the end, and when it is judged that the block operation control processing does not bring to the end, returns the processing to the Step S111 of FIG. 26 to repeat the processing following the Step S111. Conversely, in the Step S138, when it is judged, in response to the user instruction, etc., that the block operation control processing brings to the end, the request processing unit 181 ends the block operation control processing after a termination processing in Step S139.

The block 21 responds to the request from the base unit 10 as described the above, whereby the audio player 1 may more easily manage and output the massively stored contents data.

Further, the registration of the album to be reproduced is performed in correspondence to the direction applied to the installation of the block 21 as described the above, so that the user may control the music data to be reproduced only by controlling the direction for the installation of the block. The control in this manner enables the audio player 1 to more easily manage, and output the massively stored contents data.

Incidentally, while there is described that the audio player 1 attains the reproduction, based on the music selection list available as the list of the album titles acquired from the blocks installed on the reproduction slots, by establishing the correspondence between the block installation and the reproduction order (the order of albums) of the music data (for instance, the reproduction in the order from the music data corresponding to the album title read out from the block installed on the reproduction slot 32 to the music data corresponding to the album title read out from the block installed on the reproduction slot 37), it is understood that the present invention is not limited to the above, and it is allowable to perform the reproduction of the music data stored in the hard disk 87 in any given order.

For instance, it is allowable to perform the reproduction in an order from the music data corresponding to the album title read out from the block installed on the reproduction slot 32 to the music data corresponding to the album title read out from the block installed on the reproduction slot 37, or in the reverse order so as to start the reproduction with the music data corresponding to the album title read out from the block installed on the reproduction slot 37. Further, it is also allowable to perform the reproduction in an order independent of an order of the reproduction slots applied to the installation of the blocks, or to of course determine a reproduction order at random.

Furthermore, it is also allowable to, by preparing, separately from the music selection list, a reproduction list referred to in the case of the reproduction of the music data, determine the reproduction order based on the reproduction list, thereby allowing the audio player 1 to perform the control of a more complicated reproduction order.

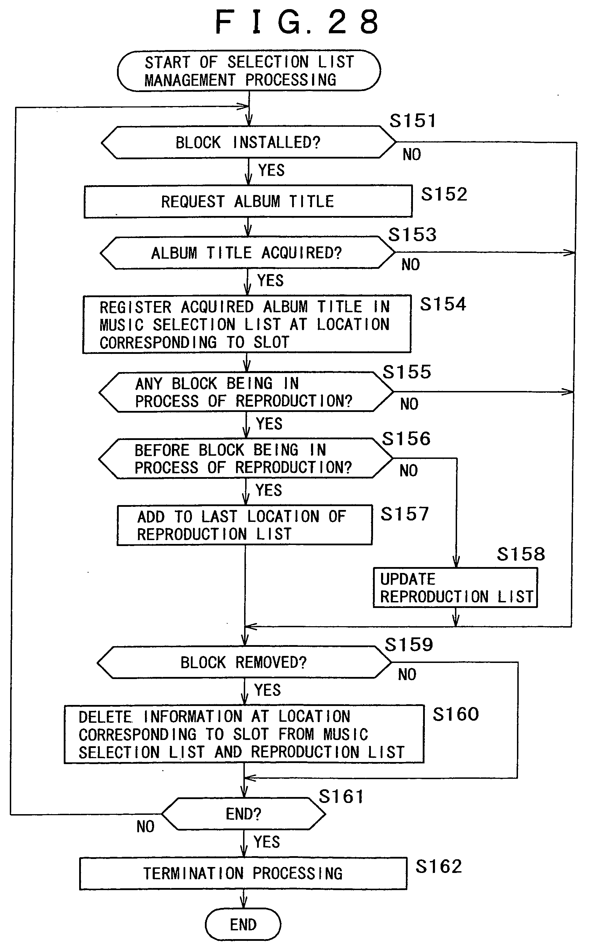

A music selection list management processing for the above case is now described with reference to a flowchart of FIG. 28. The processing of Steps S151 to S154 corresponds to the Steps S61 to S64 of FIG. 18, respectively, and allows the same processing to be applied. When the album title is registered into the music selection list, the music selection list management unit 153 controls, in Step S155, the reproduction control unit 154 to judge the presence or not of the block being in the process of reproduction.

When it is judged that the block being in the process of reproduction is present, the music selection list management unit 153 advances the processing to Step S156 to judge whether or not the installed block is on the reproduction slot at the positionforthereproductionearlierinthereproductionorder than the reproduction slot applied to the installation of the block corresponding to the music data being in the process of reproduction. When it is judged that the installed block is on the reproduction slot earlier in the reproduction order, the music selection list management unit 153 advances the processing to Step S157 to add the album title registered into the music selection list in the Step S145 to a last location of the reproduction list stored in the RAM 73, and further advances the processing to Step S159.

Conversely, in the Step S156, when it is judged that the installed block is not on the reproduction slot earlier in the reproduction order, the music selection list management unit 153 advances the processing to Step S158 to add the album title registered into the music selection list in the Step S54 to a location, which corresponds to the position of the reproduction slot, of the reproduction list stored in the RAM 73, and advances the processing to the Step S159. Conversely, in the Step S155, when it is judged that the block being in the process of reproduction is absent, the music selection list management unit 153 advances the processing to the Step S159.

Incidentally, in the Step S151, when it is judged that no block is installed, the block management unit 151 advances the processing to the Step S159. Likewise, in the Step S53, when it is judged that no album title is acquired, the album title acquisition control unit 152 advances the processing to the Step S159.

In the Step S159, the block management unit 151 judges, based on the response signal, whether or not the block is removed from the reproduction slot, like the case of the Step S65 of FIG. 18, and when it is judged that the block is removed, the blockmanagement unit 151 advances the processing to Step S160. In the Step S160, the music selection list management unit 153 deletes information relating to the album title at the location corresponding to the slot from the music selection list and the reproduction list held in the RAM 73, and advances the processing to Step S161. Conversely, in the Step S159, when it is judged that no block is removed, the block management unit 151 advances the processing to the Step S161.

The processing of the Steps S161 and S162 is performed in the same manner as the processing of the Steps S67 and S68 of FIG. 18.

Thus, the reproduction control unit 154 easily allows for the control of the more complicated reproduction order based on the block installation position. Hereby, the audio player 1 may more easily manage and output the massively stored contents data.

While there is described that the album titles corresponding to the music data stored in the hard disk 78 of the base unit 10 are used to be stored in the blocks 21 to 26, it is understood that the present invention is not limited to the above, and the information to be stored in the block may be any given data, in which case, it is allowable to adapt the block to the storage of other information such as the title of music and an artist name, for instance, thereby allowing the base unit 10 to control the music data to be reproduced based on the stored information. Further, it is also allowable to store the information of different contents in one block for each face ID in such a manner as to register the album title for a certain face ID, while registering the artist name for the other face ID, for instance. Furthermore, it is, of course, allowable to adapt the block to the storage of the music data, thereby allowing the base unit 10 to acquire the music data for the reproduction.

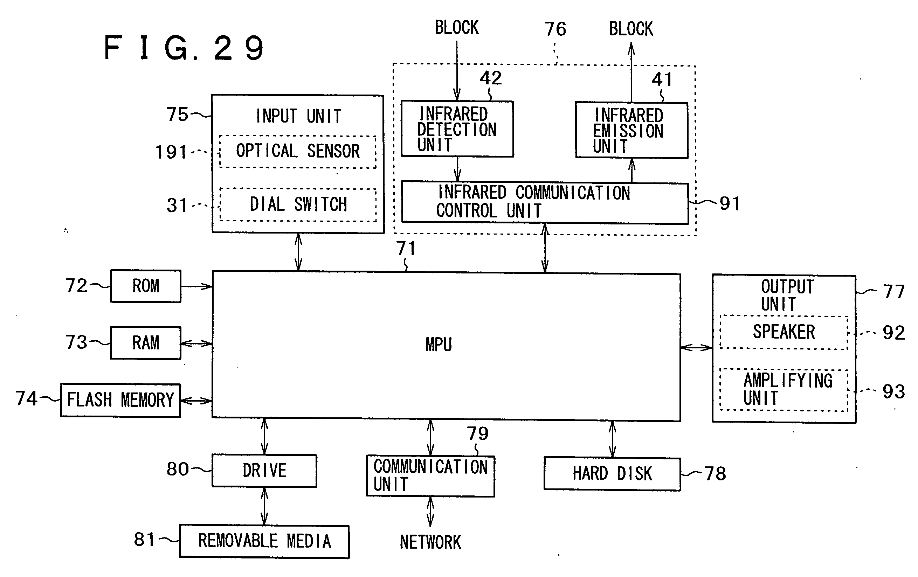

In the audio player 1, the base unit 10 or the blocks 21 to 26 may have functions other than the above functions, as a matter of course. As shown in FIG. 29, for instance, the input unit 75 of the base unit 10 may have an optical sensor 191 comprising a photoelectric converting device such as a photo diode and taking measurement on a quantity of light around the base unit 10 to ensure that control of the music data to be reproduced is attainable depending on a brightness around the base unit 10 using information relating to the quantity of light acquired from the optical sensor 191.

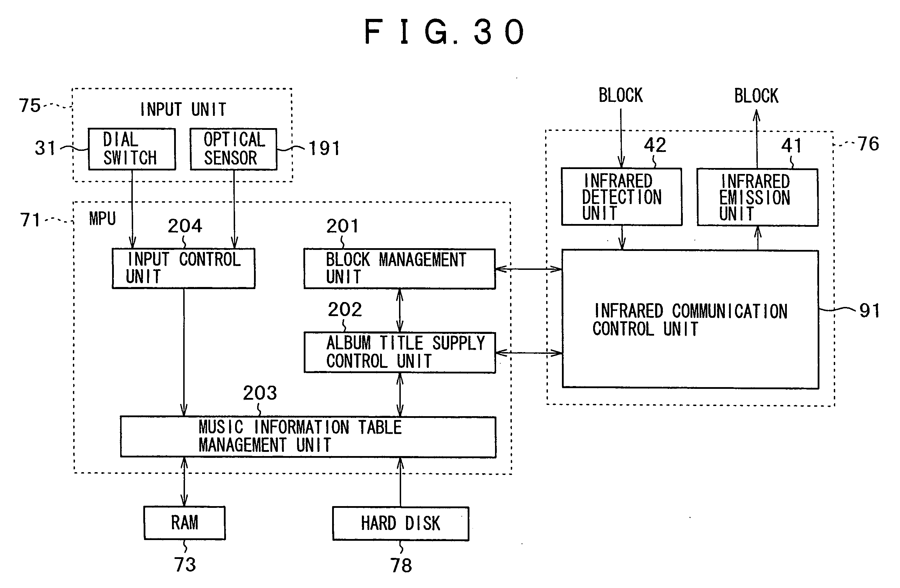

In this case, the MPU 71 of the base unit 10 has, as the function blocks for the block 21 installed on the registration slot 32, a block management unit 201, an album title supply control unit 202, a music information table management unit 203 and an input control unit 204, etc., as shown in FIG. 30. The block management unit 201, the album title supply control unit 202 and the music information table management unit 203 have respectively the same functions as the block management unit 131, the album title supply control unit 132 and the music information table management unit 133 shown in FIG. 11. The input control unit 204 controls the optical sensor 191, in addition to the dial switch 31, acquires optical sensor output supplied from the optical sensor 191, and supplies the optical sensor output to the music information table management unit 203. The music information table management unit 203 manages the music information table also based on the supplied optical sensor output.

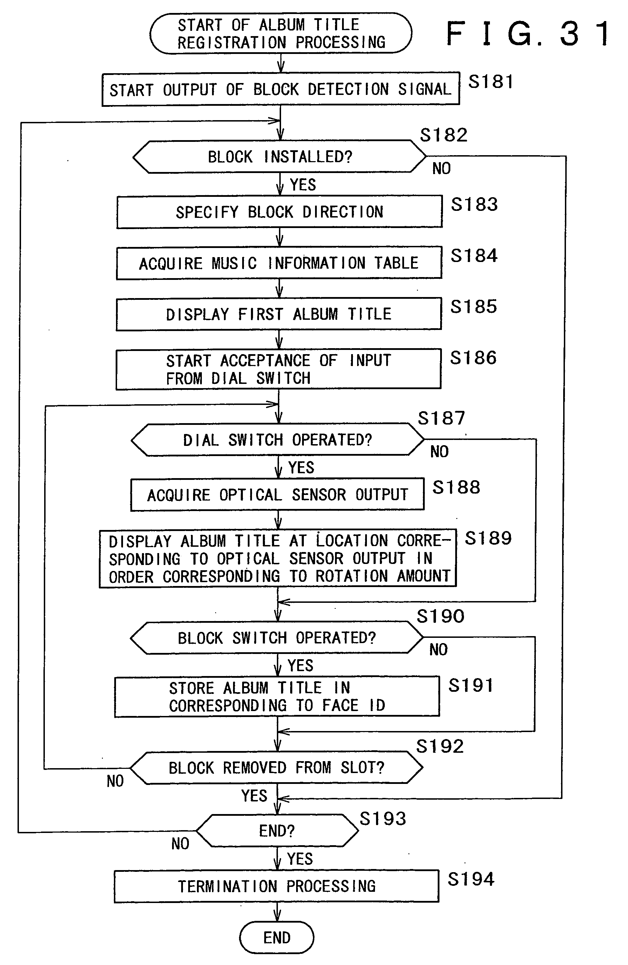

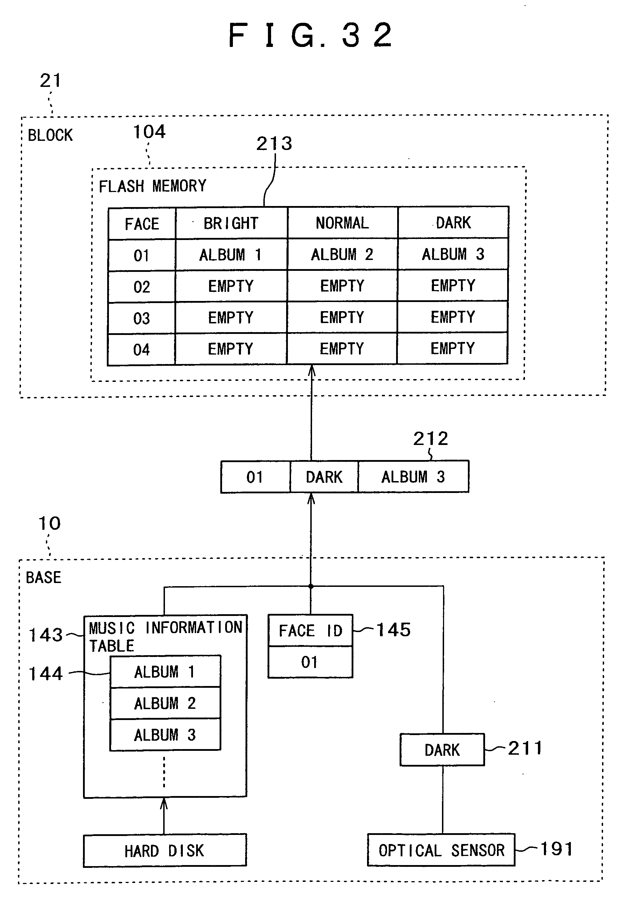

An album title registration processing performed with the base unit 10 shown in FIG. 30 is now described with reference to a flowchart of FIG. 31. A description with reference to FIG. 32 is also given as needed. The album title registration processing shown in the flowchart of FIG. 31 is basically the same as the album title registration processing shown in FIG. 12. However, in the case of the album title registration processing shown in FIG. 31, the input control unit 204 acquires the optical sensor output supplied from the optical sensor 191 in Step S188. Then the album title supply control unit 202 supplies the album title supplied from the music information table management unit 203 to the block 21 in Step S189, that is, the album title corresponding to the optical sensor output and in the order corresponding to the rotation amount, and displays the supplied album title on the display unit 61.

In Step S191, the album title supply control unit 202 adds a parameter 211 suited to the optical sensor output, in addition to the face ID 145, to the album title 144 of the music information table 143 as shown in FIG. 32, and supplies the album title 144 together with the parameter to the block 21 as information 212. The block 21 updates, based on the face ID 145 of the acquired information 212 and the parameter 211, information of an album title database 213 stored in the flash memory 104. In the case of FIG. 32, an output range of the optical sensor output is divided, as the parameter 211 suited to the optical sensor output, into levels of three stages to specify the output levels as "bright", "normal" and "dark" in descending order of the light quantity, thereby enabling the registration of the different album titles to be attained for each level. Specifically, in FIG. 30, when acquiring the output of the optical sensor 191, the input control unit 204 supplies, to the music information table management unit 203, information such as "bright", "normal" and "dark" as the parameter 211 in response to the output level of the optical sensor, together with the information relating to the rotation amount, etc. of the dial switch 31. The music information table management unit 203 supplies, to the album title supply control unit 202 based on a request of the album title supply control unit 202, the parameter 211 and the album title 144 corresponding to the user instruction enteredthrough the dial switch 31. The album title supply control unit 202 creates the information 212 by adding the face ID 145 acquired from the block management unit 201 to these supplied information, and supplies the information 212 to the block 21.

Thus, the base unit 10 is allowed to register the album title in the block installed on the registration slot 32 in correspondence to the level of the optical sensor output. Hereby, the audio player 1 may more easily manage and output the massively stored contents data.

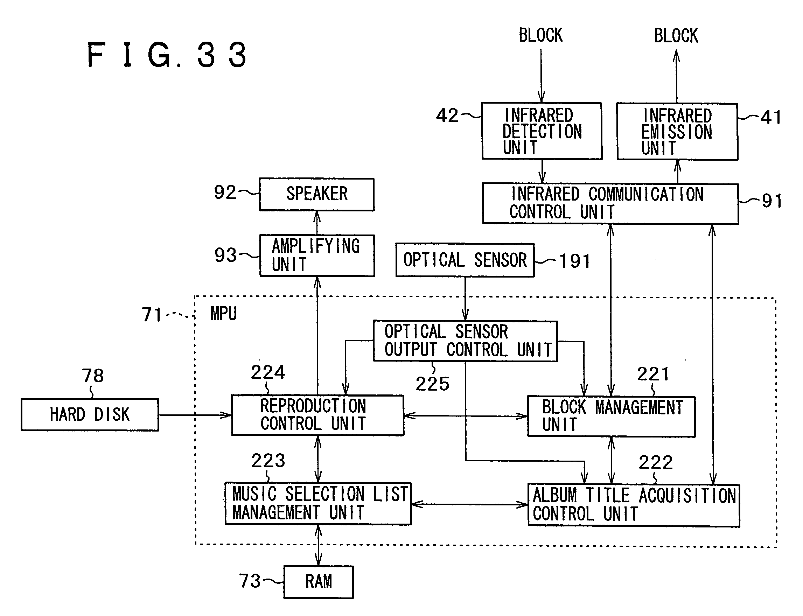

When the block containing the album title registered in response to the face ID and the optical sensor output is installed on the reproduction slot by the user, the base unit 10 acquires the albumtitle fromthe installed block in response to the output level of the optical sensor output, and reproduces the music data corresponding to the acquired album title. FIG. 33 shows an embodiment of the corresponding function blocks of the MPU 71 for the reproduction slots to the function blocks shown in FIG. 14 in the case of the reproduction of the music data using the optical sensor 191 provided on the base unit 10.

In FIG. 33, the MPU 71 has an optical sensor output control unit 225 which receives a signal supplied from the optical sensor 191, in addition to a block management unit 221 and a reproduction control unit 224, and other units interposed in-between corresponding to the units in the range of the block management unit 151 to the reproduction control unit 154 shown in FIG. 14.

The optical sensor output control unit 225 supplies, based on the optical sensor output acquired from the optical sensor 191, the above parameter to the block management unit 221, the album title acquisition control unit 222 and the reproduction control unit 224. The block management unit 221, the album title acquisition control unit 222 and the reproduction control unit 224 specify the album title to be reproduced using the supplied parameter, and performs each processing so as to reproduce the music data corresponding to the specified album title.

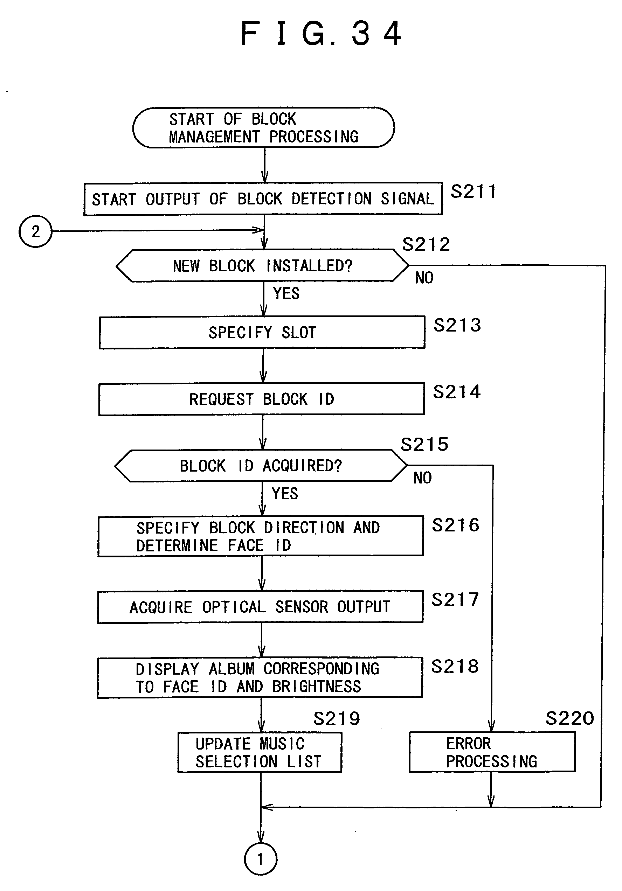

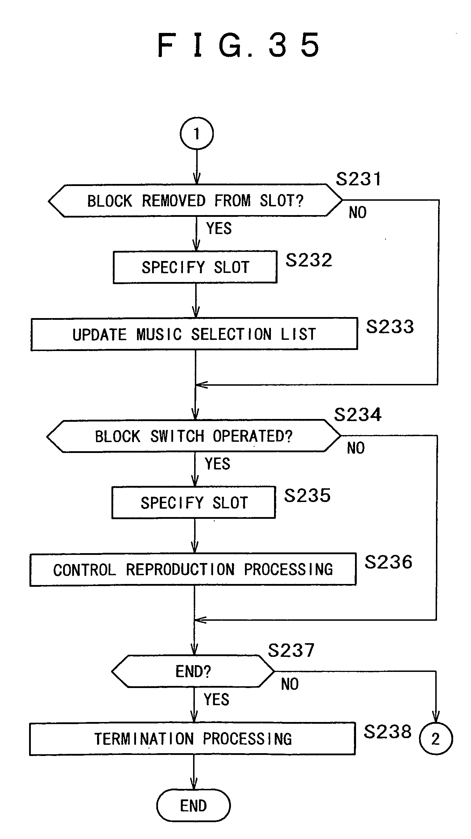

For instance, the block management unit 221 performs the block management processing described the above with reference to the flowcharts of FIGS. 15 and 16 in the same manner as the flowcharts shown in FIGS. 34 and 35. The block management processing shown in FIGS. 34 and 35 allows the basically same processing as the block management processing shown in FIGS. 15 and 16 to be applied. However, when the block management unit 221 specifies the block direction, determines the face ID, and supplies information relating to the specified face ID to the album title acquisition control unit 222 in Step S216, the optical sensor output control unit 225 acquires the optical sensor output in Step S217, and when determining the parameter in response to the acquired output level, the optical sensor output control unit 225 supplies the determined parameter to the albumtitle acquisition control unit 222. In Step S218, the album title acquisition control unit 222 supplies, to the block 22 through the infrared communication control unit 91, the face ID supplied from the block management unit 218 and the parameter supplied from the optical sensor output control unit 225, and displays the album title corresponding to the face ID and the brightness around the base unit 10.

In this manner, the base unit 10 performs a change of the album title displayed on the display unit 61 of the block 22 depending on not only the installation direction of the block 22, but also the peripheral brightness.

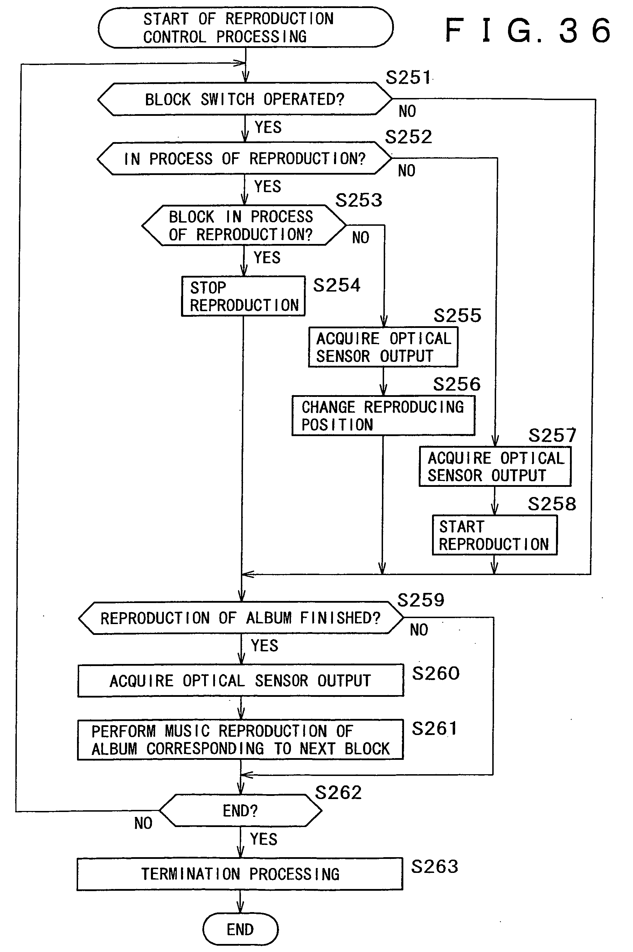

The reproduction control processing described the above with reference to FIG. 20 is performed in the same manner as the flowchart shown in FIG. 36. Specifically, in Step S253 corresponding to the processing of the Step S83 of FIG. 20, when the reproduction control unit 224 judges that the block switch of the block not corresponding to the music data being in the process of reproduction is operated in the process of reproduction of the music data, the optical sensor output control unit 225 acquires the optical sensor output in Step S255, and when determining the parameter in response to the acquired optical output level, the optical sensor output control unit 225 supplies the determined parameter to the reproduction control unit 224, unlike the case of FIG. 20. In Step S256, the reproduction control unit 224 determines, with reference to the music selection list, the album title (the music data corresponding to the album title) to be reproduced, depending on not only the face ID of the block whose block switch is operated, but also the parameter supplied from the optical sensor output control unit 225, in other words, the peripheral brightness, and changes the reproducing position.

Conversely, in the Step 252 corresponding to the processing of the Step S82 of FIG. 20, when the reproduction control unit 224 judges that the block switch is operated at the time of no reproduction of the music data, the optical sensor output control unit 225 acquires, in Step S257, the optical sensor output, and when determining the parameter depending on the acquired output level, supplies the determined parameter to the reproduction control unit 224, unlike the case of FIG. 20. In Step S258, the reproduction control unit 224 determines, with reference to the music selection list, the album title (the music data corresponding to the album title) to be reproduced, depending on not only the face ID of the block whose block switch is operated but also the parameter supplied from the optical sensor output control unit 225, in other words, the peripheral brightness, and starts the reproduction.

Further, in Step S259, corresponding to the processing of the Step S87 of FIG. 20, when the reproduction control unit 224 judges that the reproduction of the album is finished, the optical sensor output control unit 225 acquires the optical sensor output in Step S260, and when determining the parameter in response to the acquired output level, the optical sensor output control unit 225 supplies the determined parameter to the reproduction control unit 224, unlike the case of FIG. 20. In Step S261, the reproduction control unit 224 determines, with reference to the music selection list, the album title (the music data corresponding to the album title) to be reproduced among the album titles corresponding to the block that is the next in the reproduction order, depending on the parameter supplied from the optical sensor output control unit 225, that is, the peripheral brightness, and starts the reproduction.

The reproduction control unit 224 performs the selection of the music data to be reproduced depending on the brightness around the base unit 10 as described the above, whereby the user may control the music data to be reproduced not only by controlling the slot for the installation of the block and the installation direction thereof, but also by a change of the brightness around the base unit 10 with conditions, etc. in the morning, in the afternoon and at night, for instance. The control in this manner enables the audio player 1 to easily manage and output the massively stored contents data.

The registration of a large number of album titles in one block is attained as described the above, so that the audio player 1 is allowed for the reproduction of the music data in more patterns, and is also capable of suppressing a phenomenon such as the reproduction of the same music data over and over, leading to more effective management and the output of the massively stored contents data.

Incidentally, while there is described that the base unit 10 has one registration slot (the registration slot 32) and five reproduction slots (the reproduction slots 33 to 37), any number of registration slots and reproduction slots is available as long as one or more registration slots and reproduction slots are provided respectively. Further, the base unit 10 having only the reproduction slots is of course available. For instance, the audio player 1 may be formed as a portable audio player by providing one reproduction slot for the audio player 1, while providing a mechanism for fixing the block installed on the reproduction slot to the base unit 10. In this case, in a different apparatus having the registration slot, the information relating to the music data is registered into the block.

Further, while there is described that the installation direction of the block is to be specified by the position of the infrared detection unit 42, the present invention is not limited to the above, and when a mechanism of allowing the registration slot or the reproduction slots to be turned together with a turning slot is used to adjust the direction of the block installed on the slot, it is also allowable to turn the slot to ensure that the face ID is determined depending on the direction of the turned slot.

Incidentally, the hard disk 78 and the output unit 77 of the audio player 1 may be formed separately from the audio player 1, in which case, the audio player 1 may perform the control of the reproduction of the music data stored in the different apparatus (a different audio player 1, for instance) connected through the network, etc.

A plurality of audio players 1 interconnected through the network may be applied to perform the processing in cooperation with each other. For instance, the base unit 10 stores the information relating to a stop position in which the reproduction is stopped, in which case, in the different audio player in the case of the installation of the block corresponding to the music data whose reproduction is stopped, the information relating to the stop position is supplied through the network to ensure that the reproduction may be started from the stop position. Further, it may be, of course, configured to allow the block to store the information relating to the stop position.

Incidentally, while there is described that the optical sensor is used to change the music data to be reproduced depending on the change of the brightness around the base unit 10, the present invention is not limited to the above, and it is allowable to provide the base unit 10 having a calendar function, etc. to change the music data to be reproduced depending on a date and a day of a week, etc. Further, other parameters are also available to change the music data to be reproduced.

While there is described the audio player for reproducing the music data, as the reproduction control apparatus to which the present invention is applied, the contents data to be reproduced may be any data other than the music data, and the reproduction control apparatus of the present invention may be a video player, etc. for controlling the reproduction of image data corresponding to a moving image or a still image.

A series of the above processing may be performed with a hardware or performed with the software as above described. When the series of the above mentioned processing is performed with the software, a program contained in the software is installed from the recording medium, etc. to a computer incorporated in a dedicated hardware or a general-purpose personal computer, for instance, capable of performing various functions by installation of various programs.

The recording medium is configured, separately from each apparatus, not only with the removable media 81 inclusive of a package media distributed to provide the program for the user and containing the program, such as the magnetic disk (including the flexible disk), the optical disk (including the CD-ROM (Compact Disc-Read Only memory and the DVD (Digital Versatile Disc)), the Magneto-Optical disk (including the MD (Mini-Disc) (Registered trade name)) and the semiconductor memory, but also with the ROM 72 or 102, the flash memory 74 or 104 or the hard disk 78 incorporated in advance in the computer for distribution to the user and containing the program.

Incidentally, in the present specification, the steps applied to describe the program provided through the medium are those including not only the processing performed in time series according to a described sequence, but also the processing performed concurrently or individually although they are not processed in time series.

Further, the term "system" used in the present specification represents the overall apparatus composed of a plurality of apparatuses.

## Claims

1. An output control apparatus, to control output of contents data, including a body unit having a plurality of areas each applicable to arrange a prescribed object and block units each formed separately from the body unit, said output control apparatus comprising:
recording means for storing the contents data;
communication means for performing communication with each block unit disposed on said areas;
acquisition means for acquiring information relating to the contents data from the block unit using the communication performed by the communication means;
block management means for managing, using the communication performed by the communication means, an arrangement condition of the block units in a plurality of areas provided on the body unit; and
output control means for determining an output order of the contents data stored by the recording means in correspondence with the contents data-related information acquired by the acquisition means based on the management performed by the block management means, and reproducing and outputting the contents data based on the output order.

2. The output control apparatus as cited in claim 1, wherein;
said communication means performs infrared communication with each block unit disposed on the area.

3. The output control apparatus as cited in claim 1, further comprising:
detection signal output means for outputting, using the communication performed by the communication means, a detection signal to each block unit disposed on the area; and
response signal acquisition means for acquiring a response signal corresponding to the detection signal, the response signal being outputted from the block unit which acquires the detection signal, wherein;
the block management means manages the condition of arrangement of the block units based on the response signal acquired by the response signal acquisition means.

4. The output control apparatus as cited in claim 1, wherein;
said output control means reproduces and outputs a plurality of contents data corresponding to each of block units in the same order as the order which is obtained with the management performed by the block management means and a plurality of blocks is arranged in this order.

5. The output control apparatus as cited in claim 1, wherein;
said block management means further manages a direction of each block unit disposed on the area to the body unit; and
said output control means determines the contents data to be outputted based on the information relating to the block direction managed by the block management means.

6. The output control apparatus as cited in claim 1, further comprising:
measurement means for taking measurement on a quantity of light around the body unit, wherein;
the output control means selects and outputs the contents data to be outputted based on a result of the measurement performed by the measurement means among the plurality of contents data corresponding to each block unit disposed on the area.

7. An output control method for an output control apparatus to control output of contents data, including a body unit having a plurality of areas each applicable to arrange a prescribed object and block units each formed separately from the body unit, said output control method comprising:
a recording control step for controlling storing of the contents data;
a communication control step for controlling communication with each block unit disposed on said area;
an acquisition step for acquiring information relating to the contents data fromthe block unit using the communication performed by a processing of the communication control step;
a block management step for managing, using the communication performed by the processing of the communication control step, an arrangement condition of the block units in a plurality of areas provided on the body unit; and
an output control step for determining an output order of the contents data stored by a processing of the recording control step in correspondence with the contents data related-information acquired by a processing of the acquisition step based on the management performed by a processing of the block management step, and reproducing and outputting the contents data based on the output order.

8. The output control method as cited in claim 8 , wherein;
said communication control step performs infrared communication with each block unit disposed on the area.

9. The output control method as cited in claim 7, further comprising:
a detection signal output control step for controlling, using the communication performed by the processing of the communication control step, output of a detection signal to each block unit disposed on the area; and
a response signal acquisition step for acquiring a response signal corresponding to the detection signal, the response signal being outputted from the block unit which acquires the detection signal, wherein;
the processing of the block management step manages the arrangement condition of the block units based on the response signal acquired by a processing of the response signal acquisition step.

10. The output control method as cited in claim 7, wherein;
a processing of the output control step reproduces and outputs a plurality of contents data corresponding to each of block units in the same order as the order which is obtained by the management performed by the processing of the block management step and a plurality of block units are arranged in this order.

11. The output control method as cited in claim 7, wherein;
the processing of the block management step further manages a direction of each block unit disposed on the area to the body unit; and
the processing of the output control step determines the contents data to be outputted based on information relating to the block direction managed by the processing of the block management step.

12. The output control method as cited in claim 7, further comprising:
a measurement step for taking measurement on a quantity of light around the body unit, wherein;
the processing of the output control step selects and outputs the contents data to be outputted based on a result of the measurement performed by a processing of the measurement step among a plurality of contents data corresponding to each block unit disposed on the area.

13. A program for executing by a computer a processing of an output control method for an output control apparatus to control output of contents data, including a body unit having a plurality of areas each applicable to arrange a prescribed object and block units each formed separately from the body unit, said output control method comprising:
a recording control step of controlling storing of contents data;
a communication control step for controlling communication with each block unit disposed on the area;
an acquisition step for acquiring information relating to the contents data from the block unit using the communication performed by a processing of the communication control step;
a block management step for managing, using the communication performed by the processing of the communication control step, an arrangement condition of the block units in a plurality of areas provided on the body unit;
an output control step for determining an output order of the contents data stored by a processing of the recording control step in correspondence with the contents data related-information acquired by a processing of the acquisition step based on the management performed by a processing of the block management step, and reproducing and outputting the contents data based on the output order.
